(19) Europäisches Patentamt
European Patent Office
Office européen des brevets

(11) EP 1 379 573 B1

(12) EUROPÄISCHE PATENTSCHRIFT

(45) Veröffentlichungstag und Bekanntmachung des Hinweises auf die Patenterteilung:
**15.12.2010 Patentblatt 2010/50**

(21) Anmeldenummer: **02766620.5**

(22) Anmeldetag: **09.04.2002**

(51) Int Cl.:
***C08G 73/00*** *(2006.01)* ***C08J 5/00*** *(2006.01)*
***C08L 79/00*** *(2006.01)* ***H01M 8/00*** *(2006.01)*
***C08J 7/00*** *(2006.01)* ***B05D 3/00*** *(2006.01)*

(86) Internationale Anmeldenummer:
**PCT/EP2002/003900**

(87) Internationale Veröffentlichungsnummer:
**WO 2002/088219 (07.11.2002 Gazette 2002/45)**

(54) **PROTONENLEITENDE MEMBRAN UND DEREN VERWENDUNG**

PROTON-CONDUCTING MEMBRANE AND USE THEREOF

MEMBRANE CONDUCTRICE DE PROTONS ET SON UTILISATION

(84) Benannte Vertragsstaaten:
**AT BE CH CY DE DK ES FI FR GB GR IE IT LI LU MC NL PT SE TR**

(30) Priorität: **09.04.2001 DE 10117686**

(43) Veröffentlichungstag der Anmeldung:
**14.01.2004 Patentblatt 2004/03**

(60) Teilanmeldung:
**10007141.4**

(73) Patentinhaber: **BASF Fuel Cell Research GmbH**
**67056 Ludwigshafen (DE)**

(72) Erfinder:
- **CALUNDANN, Gordon**
  **North Plainfield, NJ 07060 (US)**
- **SANSONE, Michael, J.**
  **Berkeley Heights, NJ 07927 (US)**
- **UENSAL, Oemer**
  **55128 Mainz (DE)**
- **KIEFER, Joachim**
  **65510 Idstein (DE)**

(74) Vertreter: **Luderschmidt, Schüler & Partner**
**Patentanwälte**
**John-F.-Kennedy-Strasse 4**
**65189 Wiesbaden (DE)**

(56) Entgegenhaltungen:
**US-A- 3 313 783 US-A- 5 525 436**

- **OSAHENI J A ET AL: "SYNTHESIS AND PROCESSING OF HETEROCYCLIC POLYMERS AS ELECTRONIC, OPTOELECTRONIC, AND NONLINEAR OPTICAL MATERIALS. 4 NEW CONJUGATED RIGID-ROD POLY(BENZOBIS (IMIDAZOLE)S" MACROMOLECULES, AMERICAN CHEMICAL SOCIETY. EASTON, US, Bd. 28, Nr. 4, 13. Februar 1995 (1995-02-13), Seiten 1172-1179, XP000490475 ISSN: 0024-9297**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 379 573 B1

## Beschreibung

Die vorliegende Erfindung betrifft eine neuartige protonenleitende Polymermembran auf Basis von Polyazolen, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Polyazole wie beispielsweise Polybenzimidazole (®Celazole) sind seit langem bekannt. Die Herstellung derartiger Polybenzimidazole (PBI) erfolgt üblicherweise durch Umsetzung von 3,3',4,4'-Tetraaminobiphenyl mit Isophthalsäure oder Diphenyl-isophthalsäure bzw. deren Estern in der Schmelze. Das enstehende Präpolymer erstarrt im Reaktor und wird anschließend mechanisch zerkleinert. Anschließend wird das pulverförmige Präpolymer in einer Festphasen-Polymerisation bei Temperaturen von bis zu 400°C endpolymerisiert und das gewünschte Polybenzimidazole erhalten.

Zur Herstellung von Polymerfolien wird das PBI in einem weiteren Schritt in polaren, aprotischen Lösemitteln wie beispielsweise Dimethylacetamid (DMAc) gelöst und eine Folie mittels klassischer Verfahren erzeugt.

Protonenleitende, d.h. mit Säure dotierte Polyazol-Membranen für den Einsatz in PEM-Brennstoffzellen sind bereits bekannt. Die basischen Polyazol-Folien werden mit konzentrierter Phosphorsäure oder Schwefelsäure dotiert und wirken dann als Protonenleiter und Separatoren in sogenannten Polymerelektrolyt-Membran-Brennstoffzellen (PEM-Brennstoffzellen).

Bedingt durch die hervorragenden Eigenschaften des Polyazol-Polymeren können derartige Polymerelektrolytmembranen - zu Membran-Elektroden-Einheiten (MEE) verarbeitet - bei Dauerbetriebstemperaturen oberhalb 100°C insbesondere oberhalb 120°C in Brennstoffzellen eingesetzt werden. Diese hohe Dauerbetriebstemperatur erlaubt es die Aktivität der in der Membran-Elektroden-Einheit (MEE) enthaltenen Katalysatoren auf Edelmetallbasis zu erhöhen. Insbesondere bei der Verwendung von sogenannten Reformaten aus Kohlenwasserstoffen sind im Reformergas deutliche Mengen an Kohlenmonoxid enthalten, die überlicherweise durch eine aufwendige Gasaufbereitung bzw. Gasreinigung entfernt werden müssen. Durch die Möglichkeit die Betriebstemperatur zu erhöhen, können deutlich höhere Konzentrationen an CO-Verunreinigungen dauerhaft toleriert werden.

Durch Einsatz von Polymer-Elektrolyt-Membranen auf Basis von Polyazol-Polymeren kann zum einen auf die aufwendige Gasaufbereitung bzw. Gasreinigung teilweise verzichtet werden und andererseits die Katalysatorbeladung in der Membran-Elektroden-Einheit reduziert werden. Beides ist für einen Masseneinsatz von PEM-Brennstoffzellen unabdingbare Voraussetzung, da ansonsten die Kosten für ein PEM-Brennstoffzellen-System zu hoch sind.

Die bislang bekannten mit Säure dotierten Polymermembrane auf Basis von Polyazolen zeigen bereits ein günstiges Eigenschaftsprofil. Aufgrund der für PEM-Brennstoffzellen angestrebten Anwendungen, insbesondere im Automobilbereich- und der dezentralen Strom- und Wärmeerzeugung (Stationärbereich), sind diese insgesamt jedoch noch zu verbessern. Darüber hinaus haben die bislang bekannten Polymermembranen einen hohen Gehalt an Dimethylacetamid(DMAc), der mittels bekannter Trocknungsmethoden nicht vollständig entfernt werden kann. In der deutschen Patentanmeldung Nr. 10109829.4 wird eine Polymermembran auf Basis von Polyazolen beschrieben, bei der die DMAc-Kontamination beseitigt wurde. Derartige Polymermembran zeigen zwar verbesserte mechanische Eigenschaften, hinsichtlich der spezifischen Leitfähigkeit werden jedoch 0,1 S/cm (bei 140°C) nicht überschritten.

Aufgabe der vorliegende Erfindung ist Säure enthaltende Polymermembranen auf Basis von Polyazolen bereitzustellen, die einerseits die anwendungstechnischen Vorteile der Polymermembran auf Basis von Polyazolen aufweisen und andererseits eine gesteigerte spezifische Leitfähigkeit, insbesondere bei Betriebstemperaturen oberhalb von 100°C, aufweisen und zusätzliche ohne Brenngasbefeuchtung auskommen.

Wir haben nun gefunden, daß eine protonenleitende Membran auf Basis von Polyazolen erhalten werden kann, wenn die zugrundeliegenden Monomeren in Polyphosphorsäure suspendiert bzw. gelöst, in eine dünne Form gerakelt und in der Polyphosphorsäure polymerisiert werden.

Bei dieser neuen Membran kann auf die in der deutschen Patentanmeldung Nr. 10109829.4 beschriebene spezielle Nachbehandlung, eine zusätzliche Polymerlösungherstellung sowie die nachträgliche Dotierung der Folie verzichtet werden. Die dotierten Polymermembranen zeigen eine signifikant verbesserte Protonenleitfähigkeit.

Gegenstand der vorliegenden Erfindung ist eine protonenleitende Polymermembran auf Basis von Polyazolen erhältlich durch ein Verfahren umfassend die Schritte

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion

B) Aufbringen einer Schicht unter Verwendung der Mischung gemäß Schritt A) auf einem Träger oder auf einer Elektrode,

C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren.

D) Behandlung der in Schritt C) gebildeten Membran in Gegenwart von Feuchtigkeit bei Temperaturen und für eine

Dauer ausreichend bis diese selbsttragend ist.

Bei den erfindungsgemäß eingesetzten aromatischen und heteroaromatischen Tetra-Amino-Verbindungen handelt es sich vorzugsweise um 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3;3',4,4'-Tetraaminodiphenyldimethylmethan sowie deren Salze, insbesondere deren Mono-, Di-, Tri- und Tetrahydrochloridderivate.

Bei den erfindungsgemäß eingesetzten aromatischen Carbonsäuren handelt es sich um Di-carbonsäuren und Tri-carbonsäuren und Tetra-Carbonsäuren bzw. deren Estern oder deren Anhydride oder deren Säurechloride. Der Begriff aromatische Carbonsäuren umfasst gleichermaßen auch heteroaromatische Carbonsäuren. Vorzugsweise handelt es sich bei den aromatischen Dicarbonsäuren um Isophthalsäure, Terephthalsäure, Phthalsäure, 5-Hydroxyisophthatsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride. Bei den aromatischen Tri-, tetracarbonsäuren bzw. deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure, .
Bei den aromatischen Tetracarbonsäuren bzw. deren C1-C20-Alkyl-Ester oder C5-C12-Aryl-Ester oder deren Säureanhydride oder deren Säurechloride handelt es sich bevorzugt um 3,5,3',5'-biphenyltetracarboxylic acid,1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.
Bei den erfindungsgemäß eingesetzten heteroaromatischen Carbonsäuren handelt es sich um heteroaromatischen Dicarbonsäuren und Tri-carbonsäuren und Tetra-Carbonsäuren bzw. deren Estern oder deren Anhydride. Als Heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Bei den erfindungsgemäß eingesetzten aromatischen und heteroaromatischen Diaminocarbonsäuren handelt es sich bevorzugt um Diaminobenzoesäure und deren Mono und Dihydrochloridderivate.

Bevorzugt werden in Schritt A) Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.
Bei diesem Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren $H_{n+2}P_nO_{3n+1}$ (n>1) besitzen üblicherweise einen Gehalt berechnet als $P_2O_5$ (acidimetrisch) von mindestens 83%. Anstelle einer Lösung der Monomeren kann auch eine Dispersion/Suspension erzeugt werden. Die in Schritt A) erzeugte Mischung weist ein Gewichtsverhältnis Polyphosphorsäure zu Summe aller Monomeren von 1:10000 bis 10000: 1, vorzugsweise 1:1000 bis 1000: 1, insbesondere 1:100 bis 100:1, auf.

Die Schichtbildung gemäß Schritt B) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden.
Die gemäß Schritt B) erzeugte Schicht hat eine Dicke zwischen 20 und 4000 µm, vorzugsweise zwischen 30 und 3500 µm, insbesondere zwischen 50 und 3000 µm.

Das in Schritt C) gebildete Polymere auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII)

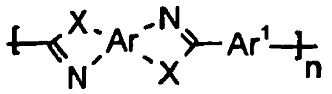

(I)

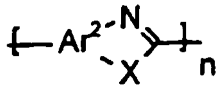

(II)

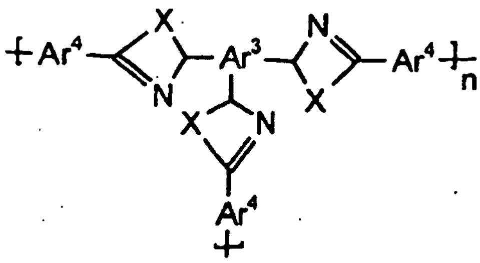

(III)

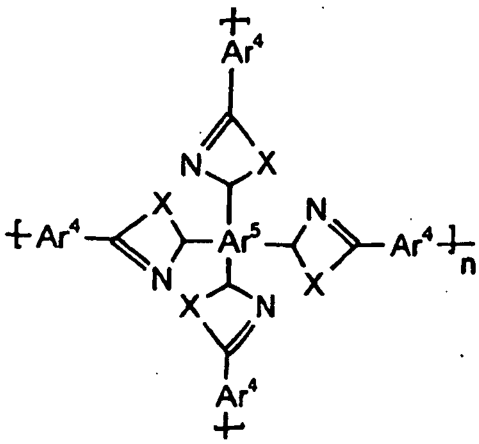

(IV)

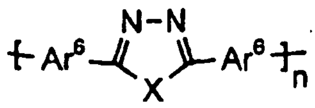

(V)

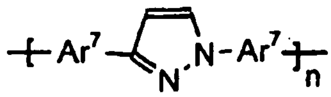

(VI)

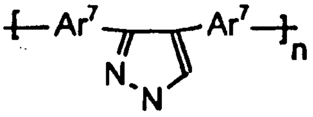

(VII)

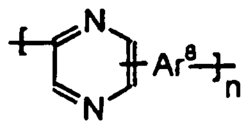

(VIII)

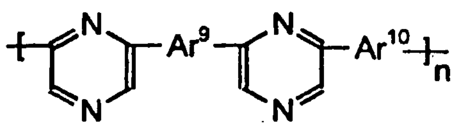

(IX)

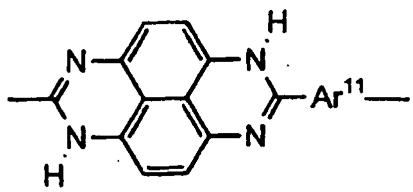

(X)

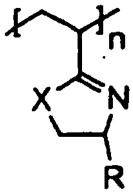

(XI)

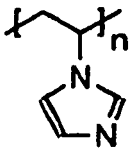
(XII)

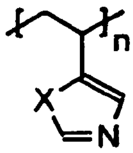
(XIII)

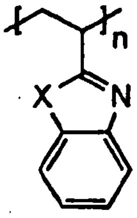
(XIV)

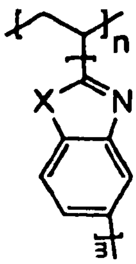
(XV)

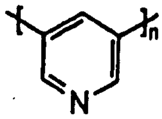
(XVI)

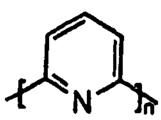
(XVII)

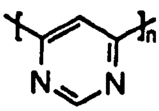
(XVIII)

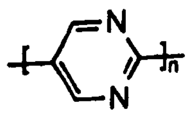

(XIX)

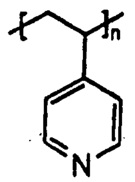

(XXI)

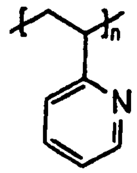

(XXII)

worin

- Ar gleich oder verschieden sind und für eine vierbindige aromatische oder heteroaromatische Gruppe, die ein- oder mehrkernig sein kann,
- $Ar^1$ gleich oder verschieden sind und für eine zweibindige aromatische oder heteroaromatische Gruppe, die ein- oder mehrkernig sein kann,
- $Ar^2$ gleich oder verschieden sind und für eine zwei oder dreibindige aromatische oder heteroaromatische Gruppe, die ein- oder mehrkernig sein kann,
- $Ar^3$ gleich oder verschieden sind und für eine dreibindige aromatische der heteroaromatische Gruppe, die ein- oder mehrkernig sein kann,
- $Ar^4$ gleich oder verschieden sind und für eine dreibindige aromatische oder heteroaromatische Gruppe, die ein- oder mehrkernig sein kann,
- $Ar^5$ gleich oder verschieden sind und für eine vierbindige aromatische oder heteroaromatische Gruppe, die ein- oder mehrkernig sein kann,
- $Ar^6$ gleich oder verschieden sind und für eine zweibindige aromatische oder heteroaromatische Gruppe, die ein- oder mehrkernig sein kann,
- $Ar^7$ gleich oder verschieden sind und für eine zweibindige aromatische oder heteroaromatische Gruppe, die ein- oder mehrkernig sein kann,
- $Ar^8$ gleich oder verschieden sind und für eine dreibindige aromatische oder heteroaromatische Gruppe, die ein- oder mehrkernig sein kann,
- $Ar^9$ gleich oder verschieden sind und für eine zwei- oder drei- oder vierbindige aromatische oder heteroaromatische Gruppe, die ein- oder mehrkernig sein kann,
- $Ar^{10}$ gleich oder verschieden sind und für eine zwei- oder dreibindige aromatische oder heteroaromatische Gruppe, die ein- oder mehrkernig sein kann,
- $Ar^{11}$ gleich oder verschieden sind und für eine zweibindige aromatische oder heteroaromatische Gruppe, die ein- oder mehrkernig sein kann,
- X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R gleich oder verschieden für Wasserstoff, eine Alkylgruppe und eine aromatische Gruppe steht und
- n, m eine ganze Zahl größer gleich 10, bevorzugt größer gleich 100 ist,

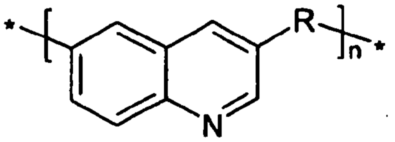

(XX)

worin

R gleich oder verschieden für eine Alkylgruppe und eine aromatische Gruppe steht und

n eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von $Ar^1$, $Ar^4$, $Ar^6$, $Ar^7$, $Ar^8$, $Ar^9$, $Ar^{10}$, $Ar^{11}$ beliebig, im Falle vom Phenylen beispielsweise kann $Ar^1$, $Ar^4$, $Ar^5$, $Ar^7$, $Ar^8$, $Ar^9$, $Ar^{10}$, $Ar^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

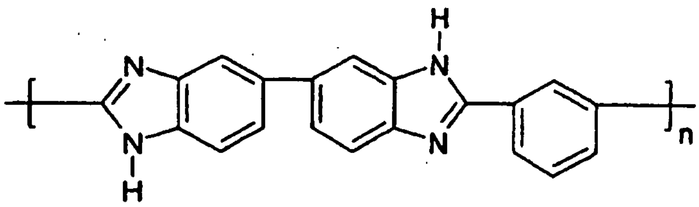

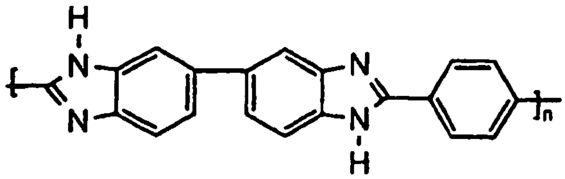

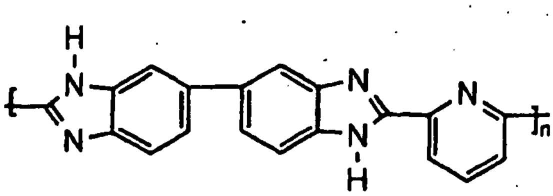

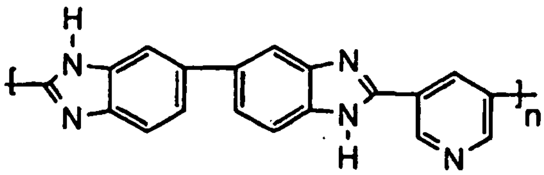

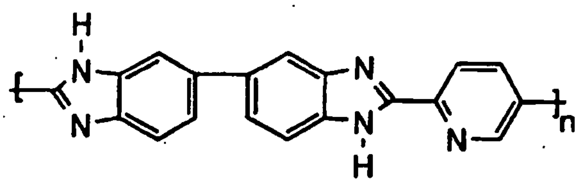

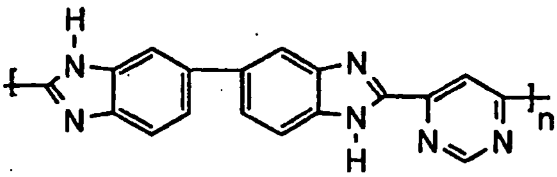

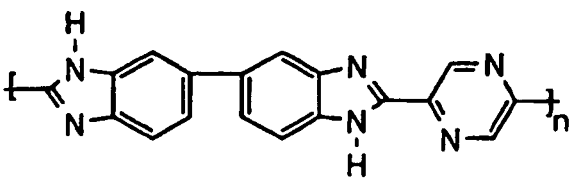

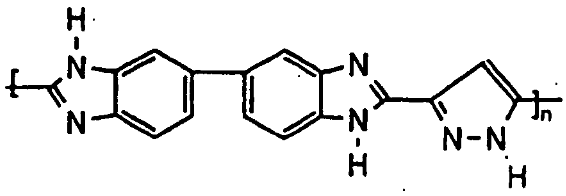

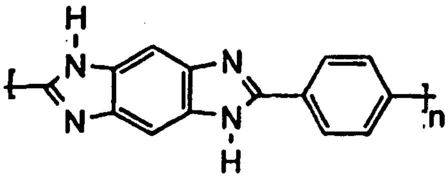

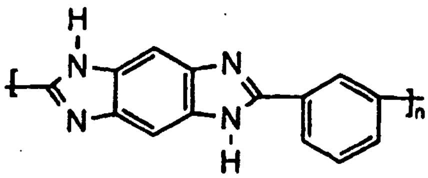

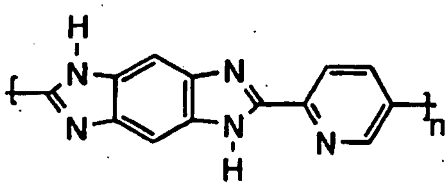

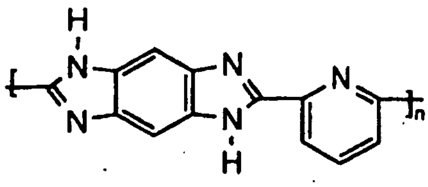

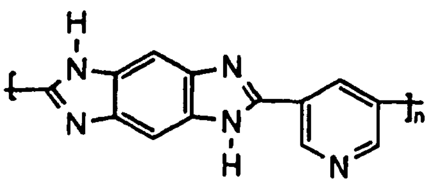

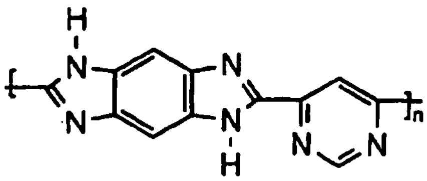

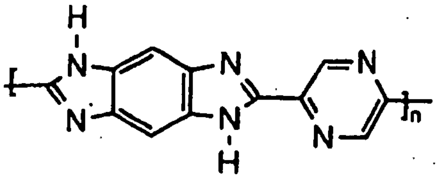

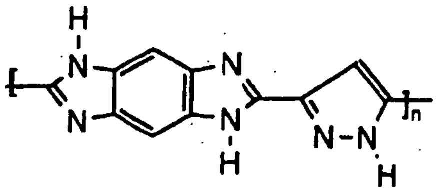

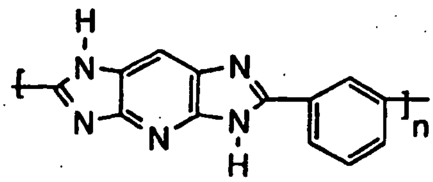

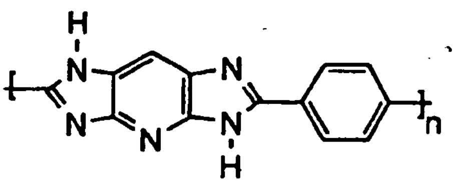

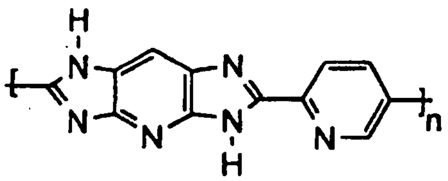

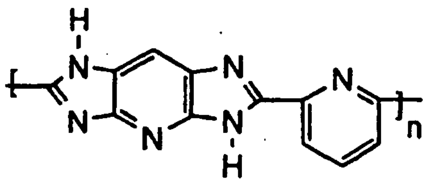

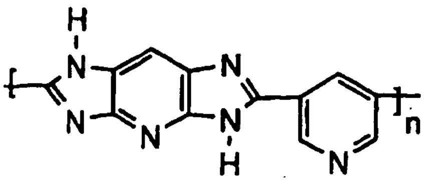

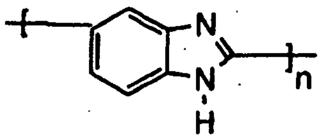

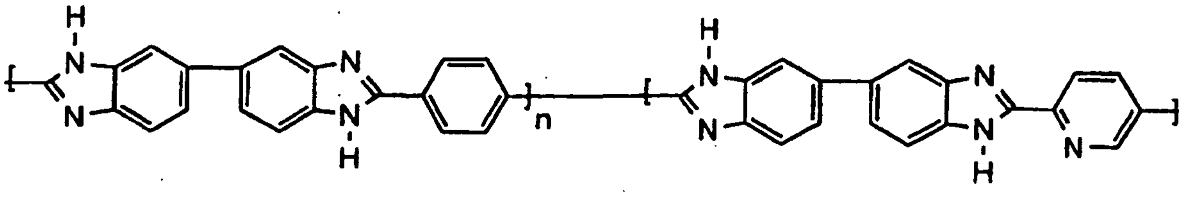

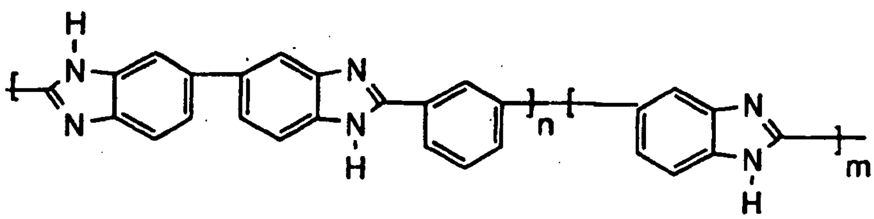

wobei n und m eine ganze Zahl größer gleich 10, vorzugsweise größer gleich 100 ist.

Die mittel des beschriebenen Verfahrens erhältlichen Polyazole, insbesondere jedoch die Polybenzimidazole zeichnen sich durch ein hohes Molekulargewicht aus. Gemessen als Intrinsische Viskosität beträgt diese mindestens 1,4 dl/g und liegt somit deutlich über dem von handelsüblichem Polybenzimidazol (IV < 1,1 dl/g).

Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei. Behandlung der gemäß Schritt C) erzeugten Polymerschicht in Gegenwart von Feuchtigkeit bei Temperaturen und für eine Dauer ausreichend bis die Schicht eine ausreichende Festigkeit für den Einsatz in Brennstoffzellen besitzt. Die Behandlung kann soweit erfolgen, daß die Membran selbsttragend ist, so daß sie ohne Beschädigung vom Träger abgelöst werden kann.

In einer Variante des Verfahrens kann durch Erwärmen der Mischung aus Schritt A) auf Temperaturen von bis zu 350°C, vorzugsweise bis zu 280°C, bereits die Bildung von Oligomeren und/oder Polymeren bewirkt werden. In Abhängigkeit von der gewählten Temperatur und Dauer, kann anschließend auf die Erwärmung in Schritt C) teilweise oder gänzlich verzichtet werden. Auch diese Variante ist Gegenstand der vorliegenden Erfindung.

Es hat sich weiterhin gezeigt, daß bei Verwendung von aromatischen Dicarbonsäuren (oder heteroaromatischen Dicarbonsäure) wie Isophthalsäure, Terephthalsäure, 2,5-Dihydroxyterephthalsäure, 4,6-Dihydroxyisophthalsäure, 2,6-Dihydroxyisophthalsäure, Diphensäure, 1,8-Dihydroxynaphthalin-3,6-Dicarbonsäure, Diphenylether-4,4'-Dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2.5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure die Temperatur in Schritt C) - oder falls die Bildung von Oligomeren und/oder Polymeren bereits in Schritt A) gewünscht wird - im Bereich von bis zu 300°C, vorzugsweise zwischen 100°C und 250°C, günstig ist.

Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/ oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran mit einer Dicke zwischen 15 und 3000 μm, vorzugsweise zwischen 20 und 2000 μm, insbesondere zwischen 20 und 1500 μm, die selbsttragend ist. Die in der Polyphosphorsäureschicht gemäß Schritt B) vorliegenden intra- und intermolekularen Strukturen (Interpenetrierende Netzwerke IPN) führen in Schritt C) zu einer geordneten Membranbildung, welche für die besonderen Eigenschaften der gebildeten Membran verantwortlich zeichnet.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden. Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 10 und 50, insbesondere zwischen 12 und 40, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Im Anschluß an die Behandlung gemäß Schritt D) kann die Membran durch Einwirken von Hitze in Gegenwart von Luftsauerstoff an der Oberfläche noch vernetzt werden. Diese Härtung der Membranoberfläche verbessert die Eigenschaften der Membran zusätzlich.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0.11 S/cm, insbesondere mindestens 0,12 S/cm.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann entweder bei Schritt A erfolgen oder nach der Polymerisation

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_6SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$. $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO4$, $CaHPO_4$, $MgHPO_4$, $HSbP_2O_8$, $HSb_3P_2O_{14}$, $H_5Sb_5P_2O_{20}$, |
| Polysäure wie | $H_3PW_{12}O_{40}.nH_2O$ (n=21-29), $H_3PW_{12}O_{40}.nH_2O$ (n=21-29), $H_xWO_3$, $HSbWO_6$, $H_3PMo_{12}O_{40}$, $H_2Sb_4O_{11}$, $HTaWO_6$, $HNbO_3$, $HTiNbO_5$, $HTTaO_5$, $HSbTeO_6$, $H_5TiaO_9$, $HSbO_3$, $H_2MoO_4$ |
| Selenite und Arsenide wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite |
| Säuren wie | $HClO_4$, $SbF_5$ |
| Füllstoffe wie | Carbide, insbesondere SiC, $Si_3N_4$, Fasern, insbesondere Glasfasern, Glaspulvern und/ oder Polymerfasern, bevorzugt auf Basis von Polyazolen. |

Als weiteres kann diese Membran auch perfluorierte Sulfonsäure Additive (0,1-20 wt%, bevorzugt 0,2-15 wt%, ganz bevorzugt 0,2- 10 wt%) enthalten. Diese Additive führen zur Leistungsverbesserung, in der Nähe der Kathode zur Erhöhung der Sauerstöfflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Danyl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Als weiteres kann die Membran auch als Additive enthalten, die die im Betrieb bei der Sauerstoffreduktion erzeugten Peroxidradikale abfangen (primäre Anitoxidanzien) oder zerstören (sekundäre Antioxidanzien) und dadurch wie in JP2001118591 A2 beschrieben Lebensdauer und Stabilität der Membran und Membranelektrodeneinheit verbessern. Die Funktionsweise und molekularen Strukturen solcher Additive sind in F. Gugumus in Plastics Additives, Hanser Verlag, 1990; N.S. Allen, M. Edge Fundamentals of Polymer Degradation and Stability, Elsevier, 1992; oder H. Zweifel, Stabilization of Polymeric Materials, Springer, 1998 beschrieben.

Nicht limitierende Beispiele für solche Additive sind:

Bis(trifluormethyl)nitroxid, 2,2-Diphenyl-1-pikrinylhydrazyl, Phenole, Alkylphenole, sterisch gehinderte Alkylphenole wie zum Beispiel Irganox, aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel Irgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Zu möglichen Einsatzgebieten der erfindungsgemäßen, dotierten Polymermembranen gehören unter anderem die Verwendung in Brennstoffzellen, bei der Elektrolyse, in Kondensatoren und in Batteriesystemen. Aufgrund ihres Eigenschaftsprofils werden die dotierten Polymermembranen vorzugsweise in Brennstoffzellen verwendet.

Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden, da die Membran nicht mehr selbsttragend sein muß. Auch eine solche Membran ist Gegenstand der vorliegenden Erfindung.

Ein weiterer Gegenstand der vorliegenden Erfindung ist eine Elektrode die mit einer protonenleitenden Polymerbeschichtung auf Basis von Polyazolen erhältlich durch ein Verfahren umfassend die Schritte

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion

B) Aufbringen einer Schicht unter Verwendung der Mischung gemäß Schritt A) auf einem Elektrode,

C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren.

D) Behandlung der in Schritt C) gebildeten Membran in Gegenwart von Feuchtigkeit.

Die Polymerisation/Bildung der Oligomere kann auch im Schritt A) erfolgen und die Lösung auf die Elektrode gerakelt werden. Dann kann auf Schritt C) teilweise oder ganz verzichtet werden.

Die vorstehend beschriebenen Varianten und bevorzugten Ausführungsformen sind auch für diesen Gegenstand gültig, so daß an dieser Stelle auf deren Wiederholung verzichtet wird.

Die Beschichtung hat nach Schritt D) eine Dicke zwischen 2 und 3000 μm, vorzugsweise zwischen 3 und 2000 μm, insbesondere zwischen 5 und 1500 μm hat.

Eine derartig beschichtete Elektrode kann in einer Membran-Elektroden-Einheit, die gegebenenfalls mindestens eine erfindungsgemäße Polymermembran aufweist, eingebaut werden.

Allgemeine Messmethoden:

Messmethode für IEC

Die Leitfähigkeit der Membran hängt stark vom Gehalt an Säuregruppen ausgedrückt durch die sog. Ionenaustauschkapazität (IEC) ab. Zur Messung der Ionenaustauschkapazität wird eine Probe mit einem Durchmesser von 3 cm ausgestanzt und in ein mit 100 ml Wasser gefülltes Becherglas gegeben. Die freigesetzte Säure wird mit 0,1 M NaOH titriert. Anschliessend wird die Probe entnommen, überschüssiges Wasser abgetupft und die Probe bei 160°C während 4h getrocknet. Dann bestimmt man das Trockengewicht, $m_0$, gravimetrisch mit einer Genauigkeit von 0,1 mg. Die Ionenaustauschkapazität wird dann aus dem Verbrauch der 0,1M NaOH bis zum ersten Titrationsendpunkt, $V_1$ in ml, und dem Trockengewicht, mo in mg, gemäss folgender Formel berechnet:

$$IEC=V_1*300/m_0$$

Messmethode für spezifische Leitfähigkeit

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand

zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten

**BEISPIELE**

**Beispiel 1**

**Poly(2,2'-(*m*-phenylen)-5,5'-bibenzimidazole (PBI)-Membran**

Zu einem Gemisch aus 32,338 g Isophthalsäure (0,195 Mol) und 41,687 g 3,3',4,4'-Tetraaminobiphenyl (0,195 Mol) wurde 525,95 g PPA in einem Dreihalskolben gegeben, welcher mit mechanischem Rührer, $N_2$-Einlass und Auslass ausgestattet ist. Die Mischung wurde erst auf 120°C für 2h lang, dann auf 150°C für 3h lang , dann auf 180°C für 2h lang anschliessend auf 220°C für 16h lang unter Rühren erhitzt. Danach wurde zu dieser Lösung bei 220°C 200 g 85 %-ige Phosphorsäure zugegeben. Die resultierende Lösung wurde bei 220°C 2h lang gerührt und schliesslich auf 240°C für 1 h lang erhöht. Die hoch viskose Lösung wurde bei dieser Temperatur mit vorgeheizten Rakelgerät auf einer Glassplatte gerakelt. Eine transparente, dunkel braun gefärbte Poly(2,2'-(m-phenylen)-5,5'-bibenzimidazole (PBI)-Membran wurde erhalten. Die Membran wurde anschliessend 1h bei RT stehengelassen, um eine selbsttragende Membran zu erhalten.

Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL PBI-Lösung in 100 ml 96%-igen $H_2SO_4$ wurde die inhärente Viskosität $\eta_{inh}$ gemessen. $\eta_{inh}$= 1,8 dL/g bei 30°C

**Beispiel 2**

**Poly(2,2'-(*m*-phonylen)-5,5'-bibenzimidazole (PBI)-Membran**

Zu einem Gemisch aus 32,338 g Isophthalsäure (0,195 Mol) und 41,687 g 3,3',4,4,-Tetraaminobiphenyl (0,195 Mol) wurde 525,95 g PPA in einem Dreihalskolben gegeben, welcher mit mechanischem Rührer, $N_2$-Einlass und Auslass ausgestattet ist. Die Mischung wurde erst auf 120°C für 2h lang, dann auf 150°C für 3h lang, dann auf 180°C für 2h lang anschliessend auf 220°C für 16h lang unter Rühren erhitzt. Danach wurde zu dieser Lösung bei 220°C 200 g 85 %-ige Phosphorsäure zugegeben. Die resultierende Lösung wurde bei 220°C 2h lang gerührt und schliesslich auf 240°C für 6h lang erhöht. Die hoch viskose Lösung wurde bei dieser Temperatur mit vorgeheizten Rakelgerät auf einer Glassplatte gerakelt. Eine transparente, dunkel braun gefärbte Poly(2,2'-(m-phenylen)-5,5'-bibenzimidazole (PBI)-Membran wurde erhalten. Die Membran wurde anschliessend 1h bei RT stehengelassen, um eine selbsttragende Membran zu erhalten.

Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL PBI-Lösung in 100 ml 96%-igen $H_2SO_4$ wurde die inhärente Viskosität $\eta_{inh}$ gemessen. $\eta_{inh}$= 2,2 dL/g bei 30°C

**Beispiel 3**

**Poly((6-6'-bibenzimidazol-2,2'-dyl)-2,5-pyridin)-Membran**

3,34 g (20 mmol) 2,5-Pyridindicarbonsäure, 4,26 g (20mmol) 3,3',4,4'-Tetraaminobiphenyl und 60 g Polyphosphorsäure wurden in einem Dreihalskolben vorgelegt, welcher mit mechanischem Rührer, $N_2$-Einlass und Auslass ausgestattet ist. Die Reaktionslösung wurde bei 180°C 20h lang gerührt. Anschliessend wurde die Temperatur auf 240°C erhöht und weitere 4h gerührt. Die Reaktionslösung wurde dann bei 240°C mit 10 ml $H_3PO_4$ verdünnt und 1 h lang gerührt. Die hoch viskose Lösung wurde bei dieser Temperatur mit vorgeheizten Rakelgerät auf einer vorgewärmten Glassplatte gerakelt. Eine transparente, orange gefärbte 2,5-Pyridin-PBI-Membran wurde erhalten. Die Membran wurde anschliessend 1d bei RT stehengelassen, um eine selbsttragende Membran zu erhalten.

Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL Polymerlösung in 100 ml 96%-igen $H_2SO_4$ wurde die inhärente Viskosität $\eta_{inh}$ gemessen.

$\eta_{inh}$= 2,9 dL/g bei 30°C

**Beispiel 4**

**Poly(2,2'-(1H-pyrazol)-5,5'-bibenzimidazol-Membran**

2,104 g (9,82.10$^{-3}$ Mol) 3,3'-4,4'-Tetraminobiphenyl, 1,7094 g (9,82.10$^{-3}$ Mol) 1-H-Pyrazole-3,5-dicarbonsäure und 41,4 g Polyphosphorsäure wurden in einem Dreihalskolben vorgelegt, welcher mit mechanischem Rührer, $N_2$-Einlass und Auslass ausgestattet ist. Die Reaktionslösung wurde bei 100°C 1h, 150°C 1h, 180°C, 6h und 220°C 8h lang gerührt. Anschliessend wurde die Temperatur auf 200°C abgekühlt. Die hoch viskose Lösung wurde bei dieser Temperatur mit vorgeheizten Rakelgerät auf einer vorgewärmten Glassplatte gerakelt. Eine transparente, orange gefärbte 2,5-Pyridin-PBI-Membran wurde erhalten. Die Membran wurde anschliessend 3d bei RT stehengelassen.
Ein kleiner Teil der Lösung wurde mit Wasser äusgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL Polymerlösung in 100 ml 96%-igen $H_2SO_4$ wurde die inhärente Viskosität $\eta_{inh}$ gemessen.
$\eta_{inh}$= 1,9 dL/g bei 30°C

**Beispiel 5:**

**Poly(2,2'-(*p*-phenylen)-5,5'-bibenzimidazole-co-poly((6-6'-bibenzimidazol-2,2'-dyl)-2,5-pyridin)-Membran**

5,283 g 2,5-Pyridindicarbonsäure (125 mmol), 15,575g Terephthalsäure (375 mMol), 26,785 g TAB (0,5 Mol) und 468 g PPA wurden in einem 500ml Dreihalskolben vorgelegt. Die Reaktionssuspension wurde auf 150°C für 2h dann auf 190°C für 4h, danach auf 220°C für 16h geheizt. Danach wurde die Reaktionslösung bei 220°C mit 600 g 85-%igen $H_3PO_4$ verdünnt, und anschliessend bei 240°C 6h lang gerührt.
Die hoch viskose Lösung wurde bei dieser Temperatur mit vorgeheizten Rakelgerät auf einer Glassplatte gerakelt. Eine transparente, dunkel braun gefärbte 2,5-Pyridine PBI-co-para-PBI-Membran wurde erhalten. Die Membran wurde anschliessend 1d bei RT stehengelassen.
Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL Polymerlösung in 100 ml 96%-igen $H_2SO_4$ wurde die inhärente Viskosität $\eta_{inh}$ gemessen.
$\eta_{inh}$= 2,6 dL/g bei 30°C

**Beispiel 6**

**AB-co-AABB-PBI-Membran**

Zu einem Gemisch aus 32,338 g Isophthalsäure (0,195 Mol), 41,687 g 3,3',4,4'-Tetraaminobiphenyl (0,195 Mol) und 29,669 g Diaminobenzoesäure (0,0195 Mol) wurde 802 g PPA in einem Dreihalskolben gegeben, welcher mit mechanischem Rührer, N2-Einlass und Auslass ausgestattet ist. Die Mischung wurde erst auf 120°C für 2h lang, dann auf 150°C für 3h lang , dann auf 180°C für 2h lang anschliessend auf 220°C für 16h lang unter Rühren erhitzt. Danach wurde zu dieser Lösung bei 220°C 200 g 85 %-ige Phosphorsäure zugegeben. Die resultierende Lösung wurde bei 220°C 4h lang gerührt und schliesslich auf 240°C für 6h lang erhöht. Die hoch viskose Lösung wurde bei dieser Temperatur mit vorgeheizten Rakelgerät auf einer Glassplatte gerakelt. Eine transparente, dunkel braun gefärbte Poly(2,2'-(m-phenylen)-5,5'-bibenzimidazole-co-polybenzimidazol-Membran wurde erhalten. Die Membran wurde anschliessend 5h bei RT stehengelassen, um eine selbsttragende Membran zu erhalten.
Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL Polymerlösung in 100 ml 96%-igen $H_2SO_4$ wurde die inhärente Viskosität $\eta_{inh}$ gemessen.
$\eta_{inh}$= 2,1 dL/g bei 30°C

**Beispiel 7**

**Poly(2,2'-(*p*-phenylen)-5,5'-bibenzimidazole-co-poly(2,2'-(1H-pyrazol)-5,5'-bibenzimidazol-Membran**

3,037g (0,0142 mol) 3,3'-4,4'-Tetraminobiphenyl, 2,119g (0,0128 Mol) Isophthalsäure, 0,2467 (1,42.10$^{-3}$ Mol) 1-H-Pyrazole-3,5-dicarbonsäure und 43,8 g Polyphosphorsäure wurden in einem Dreihalskolben vorgelegt, welcher mit mechanischem Rührer, $N_2$-Einlass und Auslass ausgestattet ist. Die Reaktionslösung wurde bei 100°C 1h, 150°C 1h,

180°C 6h und 220°C 8h lang gerührt. Anschliessend wurde die Temperatur auf 200°C abgekühlt. Die hoch viskose Lösung wurde bei dieser Temperatur mit vorgeheizten Rakelgerät auf einer vorgewärmten Glassplatte gerakelt. Eine transparente, orange gefärbte 2,5-Pyridin-PBI-Membran wurde erhalten. Die Membran wurde anschliessend 3d bei RT stehengelassen, um eine selbsttragende Membran (254 μm) zu erhalten.
Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL Polymerlösung in 100 ml 96%-igen $H_2SO_4$ wurde die inhärente Viskosität $\eta_{inh}$ gemessen. $\eta_{inh}$=1,8 dL/g bei 30°C

**Beispiel 8**

**PBI=Zr($HPO_4$)$_2$-Membran in Situ**

3,208 g (0,015 Mol) 3,3'-4,4'-Tetraminobiphenyl, 2,487 g (0,015 Mol) Isophthalsäure, 0,462 g Zirkoniumhydrogenphosphat und 64,8 g Polyphosphorsäure wurden in einem Dreihalskolben vorgelegt, welcher mit mechanischem Rührer, $N_2$-Einlass und Auslass ausgestattet ist. Die Reaktionslösung wurde bei 100°C 1h, 150°C 1h, 180°C 6h und 220°C 8h lang gerührt. Anschliessend wurde die Temperatur auf 200°C abgekühlt. Die hoch viskose Lösung wurde bei dieser Temperatur mit vorgeheizten Rakelgerät auf einer vorgewärmten Glassplatte gerakelt. Eine transparente, orange gefärbte 2,5-Pyridin-PBI-Membran wurde erhalten. Die Membran wurde anschliessend 3d bei RT stehengelassen, um eine selbsttragende Membran zu erhalten.

**Beispiel 9**

**(SiC/PBI (10/10)Membran) in Situ**

Zu einer Mischung aus 2,6948 g Isophthalsäure, 5 g SiC (~400 Mesh) und 3,474 g 3,3',4,4'-Tetraaminobiphenyl in 100 ml Kolben, welcher mit Stickstoffeinfuhr undausfuhr, einem mechanischen Rührer ausgestattet ist, wurde 93,86 g Polyphosphorsäure (83,4 ± 0.5% $P_2O_5$) zugegeben. Diese Mischung wurde auf 120°C erhitzt und 2 h lang gerührt. Die Temperatur wurde für 3h lang auf 150°C, für 2h lang auf 180°C und schliesslich für 18 lang auf 220°C erhöht. Zur resultierende PBI-Lösung in PPA wurde 11,09 g 85%-ige Phosphorsäure innerhalb 30 Min. gegeben und die Lösung für weitere 0,5 h bei 220°C gerührt. Die resultierende SiCPBI(50/50)-Lösung in 110%-igen PPA wurde bei 220°C mit einem vorgeheizten Rakelgerät (381 μm) auf einer Glasplatte gerakelt. Die Membran wurde auf RT abgekühlt und 1 d lang bei RT stehengelassen.

**5%-ige PBI-Vorratslösung in 113,6% PPA für die Herstellung SiC/PBI-Membranen**

Zu einer Mischung aus 26,948 g Isophthalsäure und 34,74 g 3,3',4,4'-Tetraaminobiphenyl in 1,5 l Kolben, welcher mit Stickstoffeinfuhr und -ausfuhr, einem mechanischen Rührer ausgestattet ist, wurde 938,6 g Polyphosphorsäure (83,4 ± 0.5% $P_2O_5$) zugegeben. Diese Mischung wurde auf 120°C erhitzt und bei 120°C 2 h bei 150°C 3h lang gerührt. Die Temperatur wurde für 2h lang auf 180°C erhöht. Dann wurde die Reaktionslösung bei 220°C 18 h lang gerührt. Die resultierende 5%-ige PBI-Lösung in PPA wurde auf die RT abgekühlt und wurde für die Herstellung folgenden SiC/PBI-Membranen verwendet
Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 16h lang bei 0,001 bar getrocknet. Aus einer 0,4 %ige PBI-Lösung in 100 ml 96%-igen $H_2SO_4$ wurde für die inhärente Viskosität $\eta_{inh}$: 1,56 dL/g erhalten.

**Beispiel 10**

**(SiC/PBI (10/10)Membran) Zugabe von SiC nach der Polymerisation**

Zur 100 g 5%-igen PBI-Vorratslösung in 113.6% PPA wurde 5 g SiC (~400 Mesh) gegeben. Die Mischung wurde 3h lang bei 220°C gerührt. Nach Zugabe von 11 g 85%-ige H3PO4 wurde die resultierte Mischung für 30 Min. lang weitergerührt. Die 10/10 Mischung aus SiC/PBI in 110%-igen PPA wurde bei 220°C mit einem vorgeheizten Rakelgerät auf einer Glasplatte gerakelt. Die Membran wurde auf RT abgekühlt und 1d lang bei RT stehengelassen.

**Beispiel 11**

**(α-$Si_3N_4$ /PBI (30/10)Membran) Zugabe von α-$Si_3N_4$ nach der Polymerisation**

Zur 100 g 5%-igen PBI-Vorratslösung in 113,6% PPA wurde 13,75 g α-$Si_3N_4$ (~325 Mesh) gegeben. Die Mischung wurde 3h lang bei 220°C gerührt.. Die 30/10 Mischung aus α-$Si_3N_4$ /PBI in 110%-igen PPA wurde bei 220°C mit einem vorgeheizten Rakelgerät auf einer Glasplatte gerakelt. Die Membran wurde auf RT abgekühlt und 1d lang bei RT stehengelassen.

**Beispiel 12**

**($Zr(HPO_4)_2$/PBI (3/97)Membran) Zugabe von $Zr(HPO_4)_2$nach der Polymerisation**

Zur 100 g 5%-igen PBI-Vorratslösung in 113,6% PPA wurde 25 g $Zr(HPO_4)_2$ gegeben. Die Mischung wurde 3h lang bei 220°C gerührt.. Die 3/97 Mischung aus $Zr(HPO_4)_2$ /PBI in 110%-igen PPA wurde bei 220°C mit einem vorgeheizten Rakelgerät auf einer Glasplatte gerakelt. Die Membran wurde auf RT abgekühlt und 1 d lang bei RT stehengelassen.

**Beispiel 13**

**Poly(2,2'-(*m*-phenylen)-5,5'-bibenzimidazole (PBI)-Membran**

Zu einem Gemisch aus 64,676 g Isophthalsäure (0,39 Mol) und 83,374 g 3,3',4,4'-Tetraaminobiphenyl (0,39 Mol) wurde 525,95 g PPA in einem Dreihalskolben gegeben, welcher mit mechanischem Rührer, $N_2$-Einlass und Auslass ausgestattet ist. Die Mischung wurde erst auf 120°C für 2h lang, dann auf 150°C für 3h lang unter Rühren erhitzt. Die resultierende Mischung bei dieser Temperatur mit vorgeheizten Rakelgerät auf einer Glassplatte gerakelt. Die Glassplatte wurde dann im Ofen unter $N_2$-Atmosphäre zuerst auf 180°C 4h lang dann auf 220°C 18h lang dann auf 240°C erhitzt. Danach wurde auf RT abgekühlt und eine dunkel braun gefärbte Poly(2,2'-(m-phenylen)-5,5'-bibenzimidazole (PBI)-Membran erhalten. Die Membran wurde anschliessend 16 h bei RT stehengelassen, um eine selbsttragende Membran zu erhalten.

**Beispiel 14**

**Poly(2,2'-(*m*-phenylen)-5,5'-bibenzimidazole (PBI)-Membran**

Zu einem Gemisch aus 97,014 g Isophthalsäure (0,585 Mol) und 125,061 g 3,3',4,4'-Tetraaminobiphenyl (0,585 Mol) wurde 525,95 g PPA in einem Dreihalskolben gegeben, welcher mit mechanischem Rührer, $N_2$-Einlass und Auslass ausgestattet ist. Die Mischung wurde bei RT durch Rühren gemischt. Die resultierende Mischung bei RT auf einer Glassplatte gerakelt. Die Glassplatte wurde dann im Ofen unter $N_2$-Atmosphäre zuerst auf 120°C 1h lang, dann auf 150°C 3h lang, dann180°C 4h lang dann auf 220°C 18h lang dann auf 240°C erhitzt. Danach wurde auf RT abgekühlt und eine dunkel braun gefärbte Poly(2,2'-(m-phenylen)-5,5'-bibenzimidazole (PBI)-Membran erhalten. Die Membran wurde anschliessend 20 h bei RT stehengelassen, um eine selbsttragende Membran zu erhalten.

**Beispiel 15:**

**Poly(2,2'-(*p*-phenylen)-5,5'-bibenzimidazole-co-poly((6-6'-bibenzimidazol-2,2'-dyl)-2,5-pyridin)-Membran**

5,283 g 2,5-Pyridindicarbonsäure (125 mMol), 15,575g Terephthalsäure (375 mMol), 26,785 g TAB (0,5 Mol) und 468 g PPA wurden in einem 500ml Dreihalskolben vorgelegt. Die Reaktionssuspension wurde auf 120°C für 2h dann auf 150°C für 4h, danach auf 190°C für 6h dann auf 220°C für 20°C geheizt. Danach wurde die Reaktionslösung bei 220°C mit 600 g 85-%igen $H_3PO_4$ verdünnt, und anschliessend bei 240°C 6h lang gerührt.
Die hoch viskose Lösung wurde bei dieser Temperatur mit vorgeheizten Rakelgerät auf einem mit Wasser befeuchtetem Filterpapier gerakelt dann die Oberfläche der Membran mit Wassersprühpistole besprüht. Eine transparente, dunkel braun gefärbte 2,5-Pyridin-PBI-co-para-PBI-Membran wurde erhalten. Die Membran wurde anschliessend 2h bei RT stehengelassen.
Ein kleiner Teil der Lösung wurde mit Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL Polymerlösung in 100 ml 96%-igen $H_2SO_4$ wurde die inhärente Viskosität $\eta_{inh}$ gemessen.

$\eta_{inh}$= 2,8 dL/g bei 30°C

**Beispiel 16: Poly(2,2'-(*p*-phenylen)-5,5'-bibenzimidazole-co-poly((6-6'-bibenzimidazol-2,2'-dyl)-2,5-pyridin)-Membran**

5,283 g 2,5-Pyridindicarbonsäure (125 mMol), 15,575g Terephthalsäure (375 mMol), 26,785 g TAB (0,5 Mol) und 468 g PPA wurden in einem 500ml Dreihalskolben vorgelegt. Die Reaktionssuspension wurde auf 120°C für 3h dann auf 150°C für 3h, danach auf 190°C für 4h dann auf 220°C für 15°C geheizt. Danach wurde die Reaktionslösung bei 220°C mit 600 g 85-%igen $H_3PO_4$ verdünnt, und anschliessend bei 240°C 4h lang gerührt. Die hoch viskose Lösung wurde bei dieser Temperatur mit vorgeheizten Rakelgerät auf einem mit Wasser getränktem Glasfaservlies gerakelt dann die Oberfläche der Membran mit Wassersprühpistole besprüht. Eine transparente, dunkel braun gefärbte 2,5-Pyridin-PBI-co-para-PBI-Membran wurde erhalten. Die Membran wurde anschliessend 5h bei RT stehengelassen. Ein kleiner Teil der Lösung wurde init Wasser ausgefallen. Das ausgefallene Harz wurde filtriert, dreimal mit $H_2O$ gewaschen, mit Ammoniumhydroxid neutralisiert, dann mit $H_2O$ gewaschen und bei 100°C 24h lang bei 0,001 bar getrocknet. Aus einer 0,2 g/dL Polymerlösung in 100 ml 96%-igen $H_2SO_4$ wurde die inhärente Viskosität $\eta_{inh}$ gemessen. $\eta_{inh}$= 2,4 dUg bei 30°C

Tabelle: IEC und Leitfähigkeitsergebnisse

| | **Dicke der Membran** | **IEC** | **Leitfähigkeit @ 120°C** |
|---|---|---|---|
| **Beispiel** | **[μm]** | **[meq/g]** | **[mS/cm]** |
| 1 | 280 | 139 | 120 |
| 2 | 340 | 166 | 130 |
| 3 | 156 | 190 | 122 |
| 4 | 220 | 126 | 117 |
| 5 | 300 | 340 | 180 |
| 6 | 250 | 130 | 120 |
| 7 | 281 | 121 | 116 |
| 8 | 300 | 178 | 160 |
| 9 | 247 | 124 | 130 |
| 10 | 322 | 151 | 121 |
| 11 | 330 | 79 | 112 |
| 12 | 314 | 168 | 150 |
| 13 | 140 | 118 | 110 |
| 14 | 200 | 131 | 114 |
| 15 | 500 | 230 | 165 |
| 16 | 440 | 290 | 160 |

**Patentansprüche**

**1.** Protonenleitende Polymermembran auf Basis von Polyazolen erhaltlich durch ein Verfahren umfassend die Schritte

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren
D) Behandlung der in Schritt C) gebildeten Membran in Gegenwart von Feuchtigkeit bei Temperaturen und für

eine Dauer ausreichend bis diese selbsttragend ist.

2. Membran gemäß Anspruch 1, **dadurch gekennzeichnet, dass** die Mischung aus Schritt A) auf Temperaturen von bis zu 350°C, vorzugsweise bis zu 280°C, erwärmt wird, so dass auf die Erwärmung in Schritt C) teilweise oder gänzlich verzichtet werden kann.

3. Membran gemäß Anspruch 1 oder 2, **dadurch gekennzeichnet, dass** als aromatische Tetra-Amino-Verbindungen 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan eingesetzt werden.

4. Membran gemäß Anspruch 1 oder 2, **dadurch gekennzeichnet, dass** als aromatische Dicarbonsäuren Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterephthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthatin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride eingesetzt werden.

5. Membran gemäß Anspruch 1 oder 2, **dadurch gekennzeichnet, dass** als aromatische Carbonsäure Tri-carbonsäuren, Tetracarbonsäuren bzw. deren C1-C20-Alkyl-Ester oder C5-C12-Aryl-Ester oder deren Säureanhydride oder deren Säurechloride, vorzugsweise 1,3,5-benzene-tricarboxylic acid (trimesic acid); 1,2,4-benzene-tricarboxylic acid (trimellitic acid); (2-Carboxyphenyl)iminodiessigsäure, 3,5,3'-biphenyltricarboxylic acid; 3,5,4'-biphenyltricarboxylic acid und/oder 2,4,6-pyridinetricarboxylic acid eingesetzt werden.

6. Membran gemäß Anspruch 1 oder 2, **dadurch gekennzeichnet, dass** als aromatische Carbonsäure Tetracarbonsäuren deren C1-C20-Alkyl-Ester oder C5-C12-Aryl-Ester oder deren Säureanhydride oder deren Säurechloride, vorzugsweise Benzol-1,2,4,5-tetracarbonsäure; Naphthalin-1,4,5,8-tetracarbonsäure 3,5,3',5'-biphenyltetracarboxylic acid; Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure eingesetzt werden.

7. Membran gemäß Anspruch 5, **dadurch gekennzeichnet, dass** der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%. beträgt.

8. Membran gemäß Anspruch 1 oder 2, **dadurch gekennzeichnet, dass** als heteroaromatische Carbonsäuren heteroaromatische Di-carbonsäuren und Tricarbonsäuren und Tetra-Carbonsäuren eingesetzt werden, welche mindestens ein Stickstoff, Sauerstoff, Schwefel oder Phosphoratom im Aromaten enthalten, vorzugsweise Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 - Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride.

9. Membran gemäß Anspruch 1 oder 2, **dadurch gekennzeichnet, dass** in Schritt A) eine Polyphosphorsäure mit einem Gehalt berechnet als $P_2O_5$ (acidimetrisch) von mindestens 83% eingesetzt wird.

10. Membran gemäß Anspruch 1 oder 2, **dadurch gekennzeichnet, dass** in Schritt A) eine Lösung oder eine Dispersion/ Suspension erzeugt wird.

11. Membran gemäß Anspruch 1, **dadurch gekennzeichnet, dass** in Schritt C) ein Polymer enthaltend Benzimidazoleinheiten der Formel

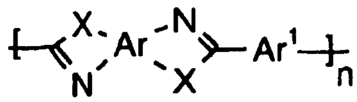

(I)

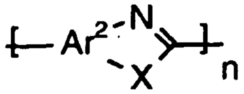

(II)

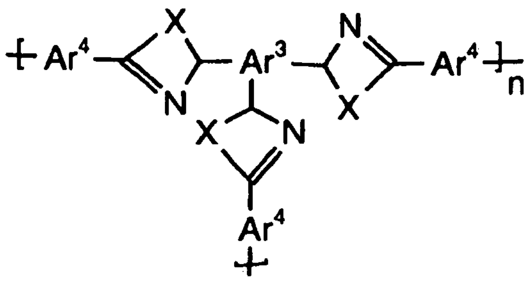

(III)

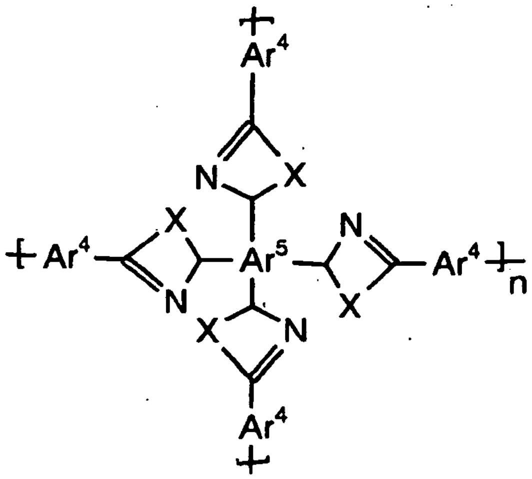

(IV)

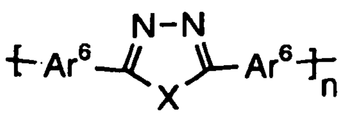

(V)

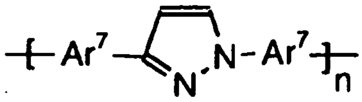

(VI)

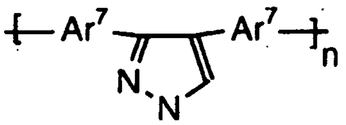

(VII)

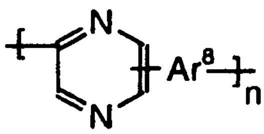

(VIII)

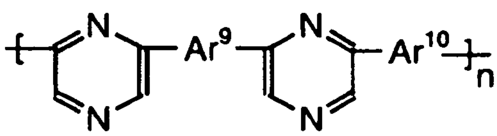

(IX)

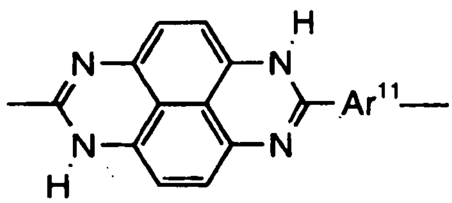

(X)

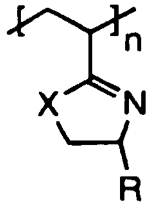

(XI)

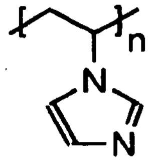

(XII)

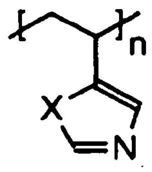

(XIII)

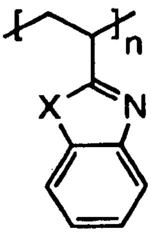

(XIV)

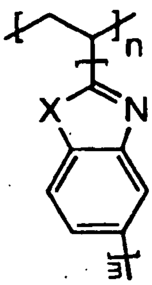

(XV)

worin

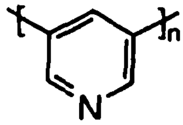

(XVI)

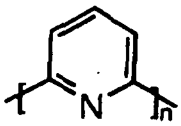

(XVII)

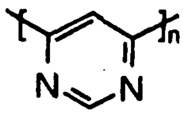

(XVIII);

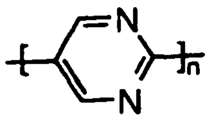

(XIX)

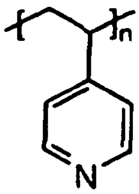

(XXI)

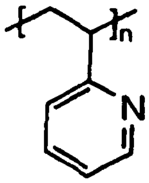

(XXII)

worin

Ar gleich oder verschieden sind und für eine vierbindige aromatische oder hete- roaromatische Gruppe, die ein- oder mehrkernig sein kann,
$Ar^1$ gleich oder verschieden sind und für eine zweibindige aromatische oder he- teroaromatische Gruppe, die ein- oder mehrkernig sein kann,
$Ar^2$ gleich oder verschieden sind und für eine zwei oder dreibindige aromatische oder heteroaromatische Gruppe, die ein- oder mehrkernig sein kann,
$Ar^3$ gleich oder verschieden sind und für eine dreibindige aromatische oder hete- roaromatische Gruppe, die ein- oder mehrkernig sein kann,
$Ar^4$ gleich oder verschieden sind und für eine dreibindige aromatische oder hete- roaromatische Gruppe, die ein- oder mehrkernig sein kann, .
$Ar^5$ gleich oder verschieden sind und für eine vierbindige aromatische oder hete- roaromatische Gruppe, die ein- oder mehrkernig sein kann,
$Ar^6$ gleich oder verschieden sind und für eine zweibindige aromatische oder he- teroaromatische Gruppe, die ein- oder mehrkernig sein kann,
$Ar^7$ gleich oder verschieden sind und für eine zweibindige aromatische oder he- teroaromatische Gruppe, die ein- oder mehrkernig sein kann,
$Ar^8$ gleich oder verschieden sind und für eine dreibindige aromatische oder hete- roaromatische Gruppe, die ein- oder mehrkernig sein kann,
$Ar^9$ gleich oder verschieden sind und für eine zwei- oder drei- oder vierbindige aromatische oder heteroaromatische Gruppe, die ein- oder mehrkernig sein kann,
$Ar^{10}$ gleich oder verschieden sind und für eine zwei- oder dreibindige aromatische oder heteroaromatische Gruppe, die ein- oder mehrkernig sein kann,
$Ar^{11}$ gleich oder verschieden sind und für eine zweibindige aromatische oder he- teroaromatische Gruppe, die ein- oder mehrkernig sein kann,
X gleich oder verschieden ist und für Sauerstoff, Schwefel oder eine Ami- nogruppe, die ein Wasserstoffatom, eine 1- 20 Kohlenstoffatome aufweisen- de Gruppe, vorzugsweise eine verzweigte oder nicht verzweigte Alkyl- oder Alkoxygruppe, oder eine Arylgruppe als weiteren Rest trägt
R gleich oder verschieden für Wasserstoff, eine Alkylgruppe und eine aromati- sche Gruppe steht und
n, m eine ganze Zahl größer gleich 10, bevorzugt größer gleich 100 ist,

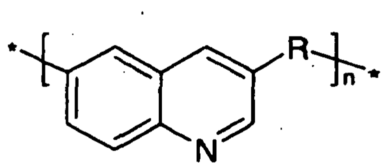

(XX)

worin

R gleich oder verschieden für eine Alkylgruppe und eine aromatische Gruppe steht und
n eine ganze Zahl größer gleich 10, bevorzugt größer gleich 100 ist,

gebildet wird.

**12.** Membran gemäß Anspruch 1, **dadurch gekennzeichnet, dass** in Schritt C) ein Polymer ausgewählt aus der Gruppe Polybenzimidazol, Poly(pyridine), Poly(pyrimidine), Polyimidazole, Polybenzthiazole, Polybenzoxazole, Polyoxadiazole, Polyquinoxalines, Polythiadiazole und Poly(tetrazapyrene) gebildet wird.

**13.** Membran gemäß Anspruch 1, **dadurch gekennzeichnet, dass** in Schritt C) ein Polymer enthaltend wiederkehrende Benzimidazoleinheiten der Formel

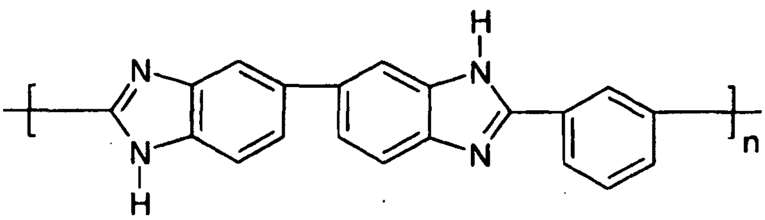

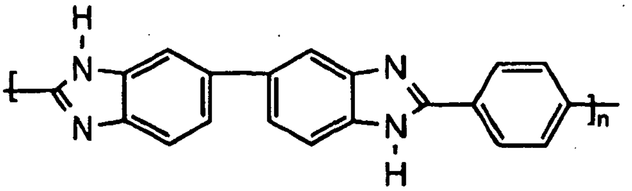

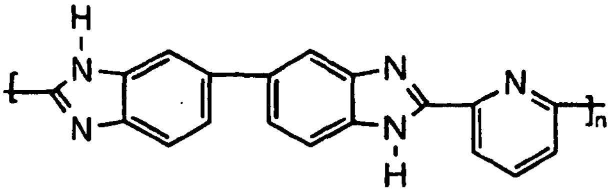

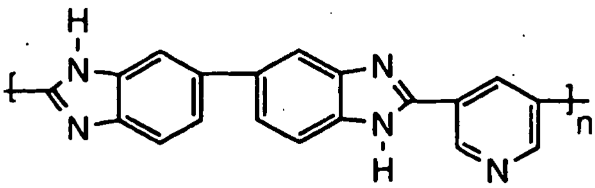

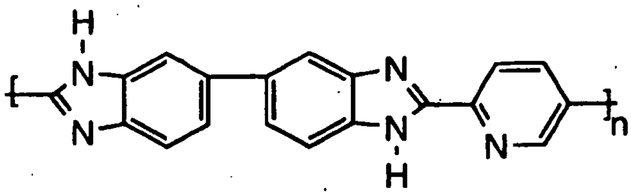

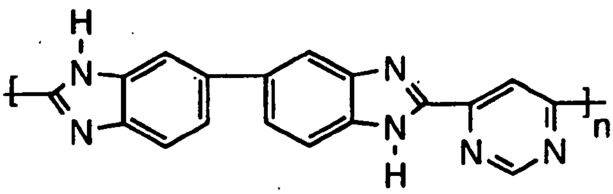

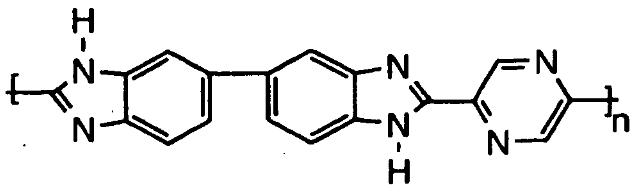

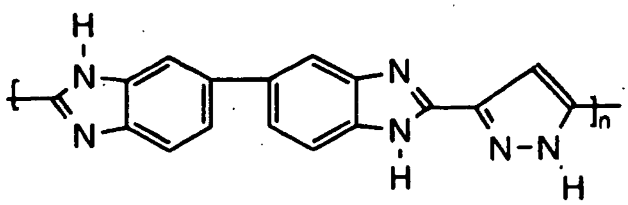

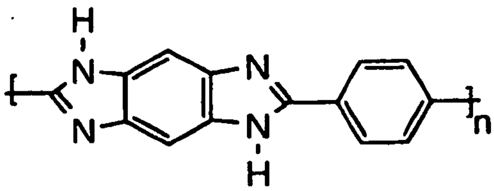

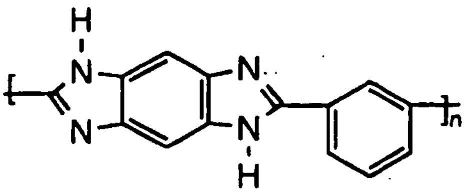

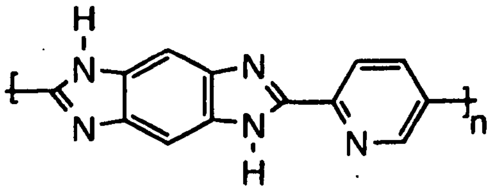

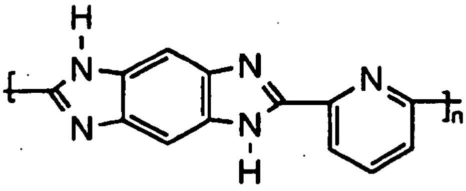

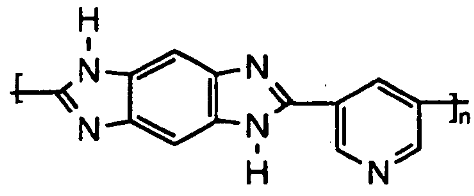

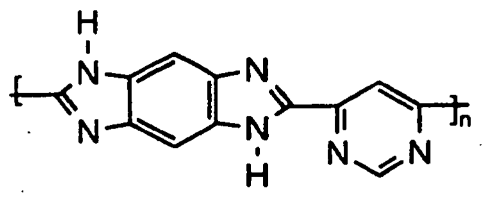

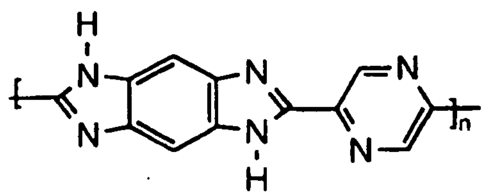

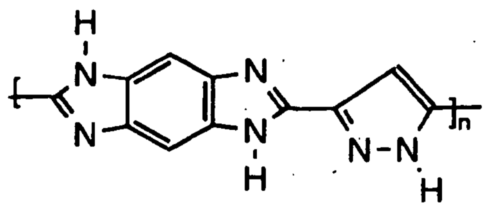

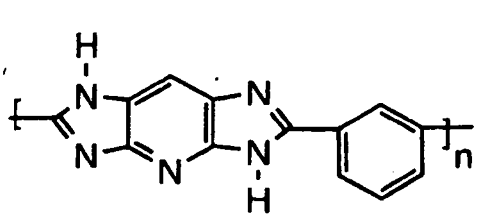

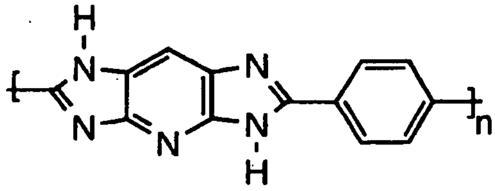

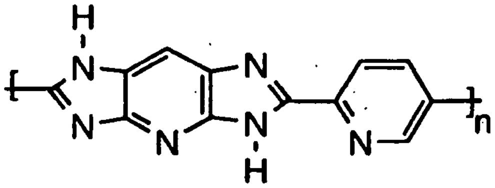

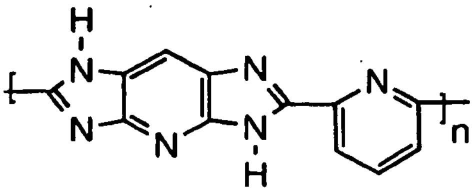

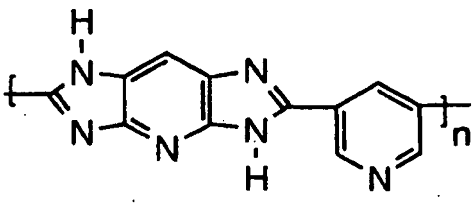

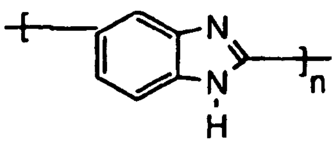

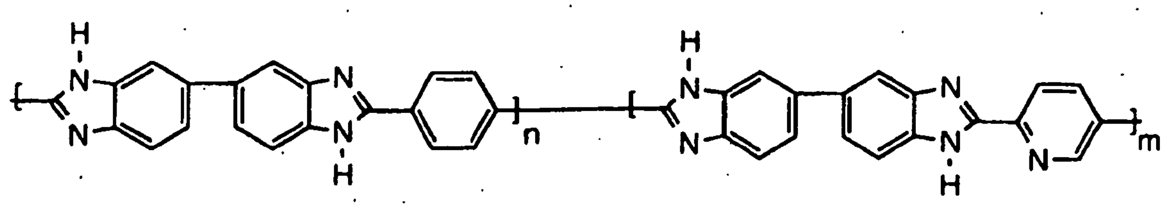

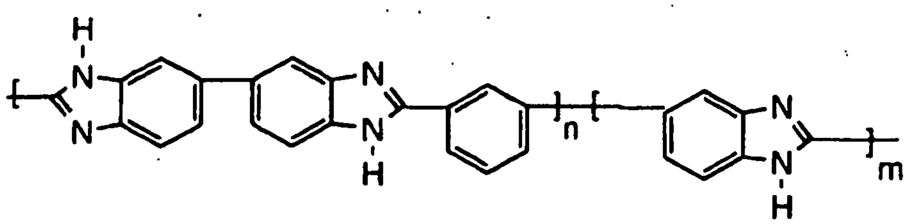

wobei n und m eine ganze Zahl größer gleich 10, vorzugsweise größer gleich 100 ist, gebildet wird.

14. Membran gemäß Anspruch 1 oder 2, **dadurch gekennzeichnet, dass** nach Schritt A) und vor Schritt B) die Viskosität durch Zugabe von Phosphorsäure eingestellt wird.

15. Membran gemäß Anspruch 1 oder 2, **dadurch gekennzeichnet, dass** die Behandlung der Membran in Schritt D) bei Temperaturen oberhalb 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf erfolgt.

16. Membran gemäß Anspruch 1 oder 2, **dadurch gekennzeichnet, dass** die Behandlung der Membran in Schritt D) zwischen 10 Sekunden und 300 Stunden, vorzugsweise 1 Minute bis 200 Stunden, beträgt.

17. Membran gemäß Anspruch 1 oder 2, **dadurch gekennzeichnet, dass** in Schritt B) als Träger eine Elektrode gewählt wird und die Behandlung gemäß Schritt D) dergestalt ist, dass die gebildete Membran nicht mehr selbsttragend ist.

18. Membran gemäß Anspruch 1 oder 2, **dadurch gekennzeichnet, dass** in Schritt B) eine Schicht mit einer Dicke von 20 und 4000 µm, vorzugsweise zwischen 30 und 3500 µm, insbesondere zwischen 50 und 3000 µm erzeugt wird.

19. Membran gemäß Anspruch 1 oder 2, **dadurch gekennzeichnet, dass** die nach Schritt D) gebildete Membran eine Dicke zwischen 15 und 3000 µm, vorzugsweise zwischen 20 und 2000 µm, insbesondere zwischen 20 und 1500 µm hat.

20. Elektrode die mit einer protonenleitenden Polymerbeschichtung auf Basis von Polyazolen erhältlich durch ein Verfahren umfassend die Schritte

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren.
D) Behandlung der in Schritt C) gebildeten Membran in Gegenwart von Feuchtigkeit, versehen ist.

21. Elektrode gemäß Anspruch 20, **dadurch gekennzeichnet, dass** die Mischung aus Schritt A) auf Temperaturen von bis zu 350°C, vorzugsweise bis zu 280°C, erwärmt wird, so dass auf die Erwärmung in Schritt C) teilweise oder gänzlich verzichtet werden kann.

## Claims

1. A proton-conducting polymer membrane based on polyazoles, which is obtainable by a method comprising the steps

   A) Mixing one or more aromatic tetraamino compounds with one or more aromatic carboxylic acids or esters thereof, which contain at least two acid groups per carboxylic acid monomer, or mixing one or more aromatic and/or heteroaromatic diaminocarboxylic acids, in polyphosphoric acid to form a solution and/or dispersion,
   B) Applying a layer to a support using the mixture according to step A),
   C) Heating the flat structure/layer obtainable according to step B) to temperatures of up to 350 °C, preferably up to 280 °C, under inert gas to form the polyazole polymer,
   D) Treatment of the membrane formed in step C) in the presence of moisture at temperatures and for a sufficient duration, until it is self-supporting.

2. The membrane according to claim 1, **characterized in that** the mixture from step A) is heated to temperatures of 350 °C, preferably up to 280 °C, so that the heating in step C) can partially or completely be dispensed with.

3. The membrane according to claim 1 or 2, **characterized in that** 3,3',4,4'-tetraaminobiphenyl, 2,3,5,6-tetraaminopyridine, 1,2,4,5-tetraaminobenzene, 3,3',4,4'-tetraaminodiphenylsulfone, 3,3',4,4'-tetraaminodiphenylether, 3,3',4,4'-tetraaminobenzophenone, 3,3',4,4'-tetraaminodiphenylmethane and 3,3',4,4'-tetraaminodiphenyldimethylmethane are used as aromatic tetraamino compounds.

4. The membrane according to claim 1 or 2, **characterized in that** isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid, 1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, diphenylether-4,4'-dicarboxylic acid, benzophenone-4,4'-dicarboxylic acid, diphenylsulfone-4,4'-dicarboxylic acid, biphenyl-4,4'-dicarboxylic acid, 4-trifluoromethylphthalic acid, 2,2-bis(4-carboxyphenyl)hexafluoropropane, 4,4'-stilbenedicarboxylic acid, 4-carboxycinnamic acid or their C1-C20 alkyl esters or C5-C12 aryl esters or their acid anhydrides or acid chlorides are used as aromatic dicarboxylic acids.

5. The membrane according to claim 1 or 2, **characterized in that** tricarboxylic acids, tetracarboxylic acids or their C1-C20 alkyl esters or C5-C12 aryl esters or their acid anhydrides or acid chlorides, preferably 1,3,5-benzenetricarboxylic acid (trimesic acid), 1,2,4-benzenetricarboxylic acid (trimellitic acid), (2-carboxyphenyl)iminodiacetic acid, 3,5,3'-biphenyltricarboxylic acid, 3,5,4'-biphenyltricarboxylic acid and/or 2,4,6-pyridinetricarboxylic acid are used as aromatic carboxylic acids.

6. The membrane according to claim 1 or 2, **characterized in that** tetracarboxylic acids, their C1-C20 alkyl esters or C5-C12 aryl esters or their acid anhydrides or their acid chlorides, preferably benzene-1,2,4,5-tetracarboxylic acid; naphthalene-1 ,4,5,8-tetracarboxylic acid, 3,5,3',5'-biphenyltetracarboxylic acid; benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid, 1,4,5,8-naphthalenetetracarboxylic acid are used as aromatic carboxylic acids.

7. The membrane according to claim 5, **characterized in that** the content of tricarboxylic acid or tetracarboxylic acids (based on dicarboxylic acid used) is from 0 to 30 mol%, preferably 0.1 to 20 mol%, in particular 0.5 to 10 mol%.

8. The membrane according to claim 1 or 2, **characterized in that** heteroaromatic dicarboxylic acids and tricarboxylic acids and tetracarboxylic acids which have at least one nitrogen, oxygen, sulfur or phosphorus atom in the aromatic, preferably pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid, benzimidazole-5,6-dicarboxylic acid and also their C1-C20 alkyl esters or C5-C12 aryl esters or their acid anhydrides or their acid chlorides are used as heteroaromatic carboxylic acids.

9. The membrane according to claim 1 or 2, **characterized in that** a polyphosphoric acid having a content calculated as $P_2O_5$ (acidimetric) of at least 83% is used in step A).

**10.** The membrane according to claim 1 or 2, **characterized in that** a solution or a dispersion/suspension is produced in step A).

**11.** The membrane according to claim 1, **characterized in that** a polymer is formed in step C) containing benzimidazole units of the formula

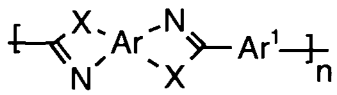

(I)

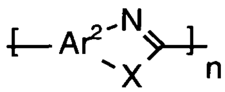

(II)

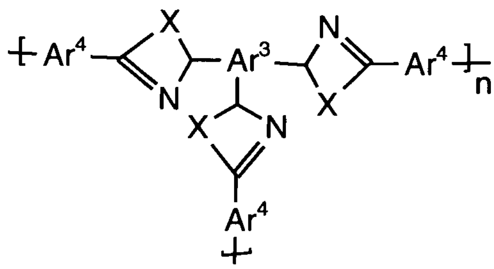

(III)

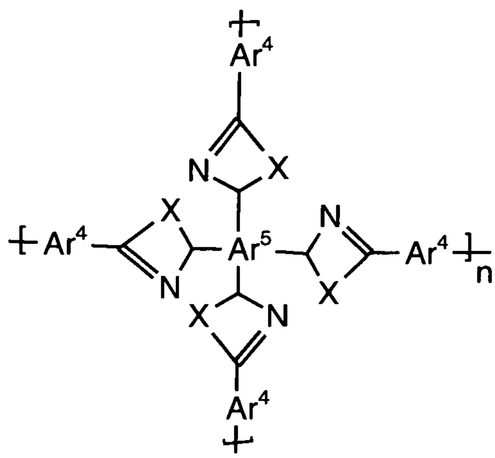

(IV)

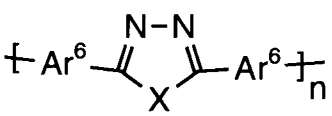

(V)

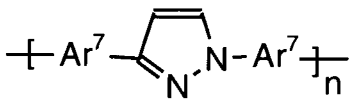

(VI)

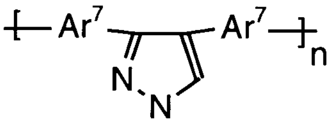

(VII)

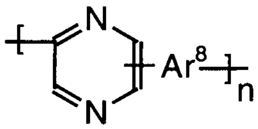

(VIII)

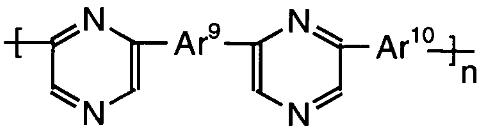

(IX)

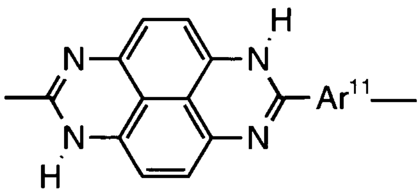

(X)

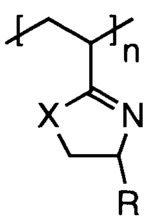

(XI)

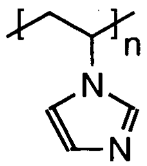

(XII)

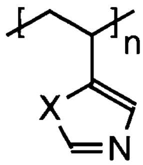

(XIII)

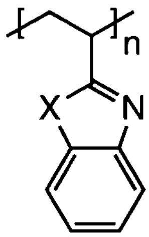

(XIV)

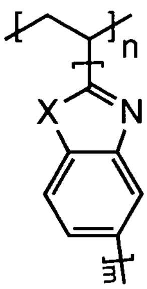

(XV)

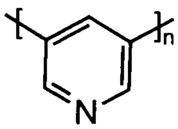

(XVI)

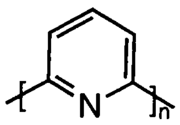

(XVII)

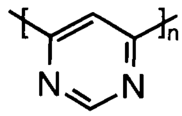

(XVIII)

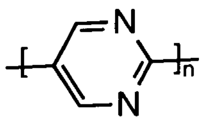

(XIX)

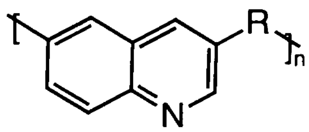

(XX)

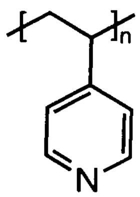

(XXI)

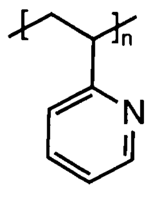

(XXII)

where

Ar are identical or different and represent a tetravalent aromatic or het- eroaromatic group which can be mononuclear or polynuclear,
$Ar^1$ are identical or different and represent a divalent aromatic or het- eroaromatic group which can be mononuclear or polynuclear,
$Ar^2$ are identical or different and represent a divalent or trivalent aromatic or heteroaromatic group which can

be mononuclear or polynuclear,
Ar[3] are identical or different and represent a trivalent aromatic or het- eroaromatic group which can be mononuclear or polynuclear,
Ar[4] are identical or different and represent a trivalent aromatic or het- eroaromatic group which can be mononuclear or polynuclear,
Ar[5] are identical or different and represent a tetravalent aromatic or het- eroaromatic group which can be mononuclear or polynuclear,
Ar[6] are identical or different and represent a divalent aromatic or het- eroaromatic group which can be mononuclear or polynuclear,
Ar[7] are identical or different and represent a divalent aromatic or het- eroaromatic group which can be mononuclear or polynuclear,
Ar[8] are identical or different and represent a trivalent aromatic or het- eroaromatic group which can be mononuclear or polynuclear,
Ar[9] are identical or different and represent a divalent or trivalent or tetrava- lent aromatic or heteroaromatic group which can be mononuclear or polynuclear,
Ar[10] are identical or different and represent a divalent or trivalent aromatic or heteroaromatic group which can be mononuclear or polynuclear,
Ar[11] are identical or different and represent a divalent aromatic or het- eroaromatic group which can be mononuclear or polynuclear,
X are identical or different and represent oxygen, sulfur or an amino group bearing a hydrogen atom, a group having 1-20 carbon atoms, preferably a branched or unbranched alkyl or alkoxy group, or an aryl group as further radical,
R identical or different, represent hydrogen, an alkyl group or an aromatic group and
n, m are each an integer greater than or equal to 10, preferably greater than or equal to 100,

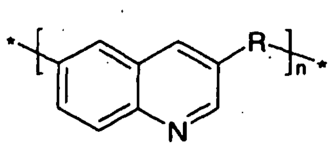
(XX)

where

R identical or different, represents an alkyl group or an aromatic group and
n is an integer greater than or equal to 10, preferably greater than or equal to 100.

**12.** The membrane according to claim 1, **characterized in that** a polymer selected from the group consisting of polybenzimidazole, poly(pyridines), poly(pyrimidines), polyimidazoles, polybenzothiazoles, polybenzoxazoles, polyoxadiazoles, polyquinoxalines, polythiadiazoles and poly(tetrazapyrenes) is formed in step C).

**13.** The membrane according to claim 1, **characterized in that** a polymer is formed in step C) containing recurring benzimidazole units of the formula

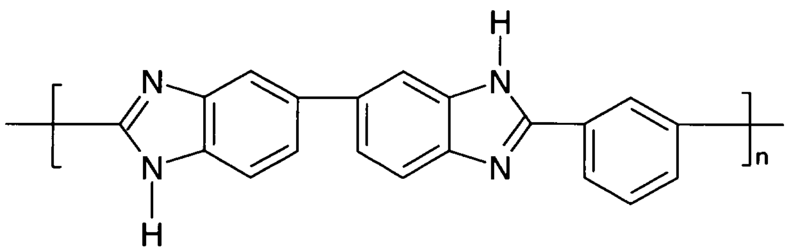

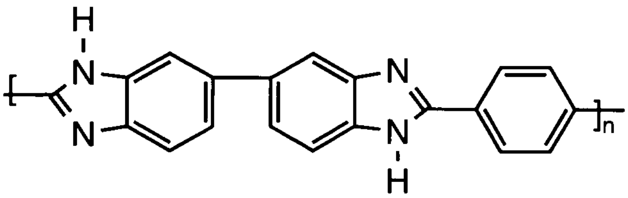

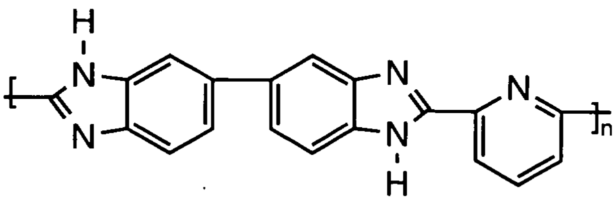

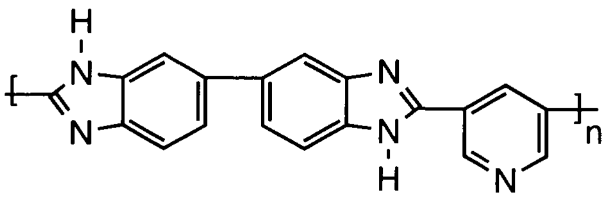

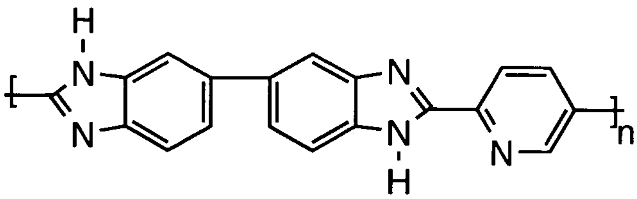

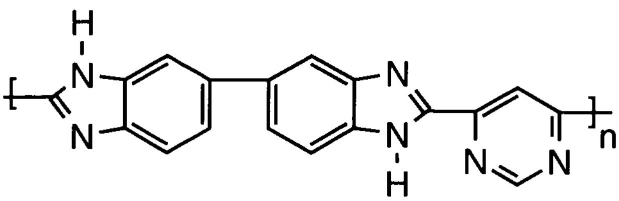

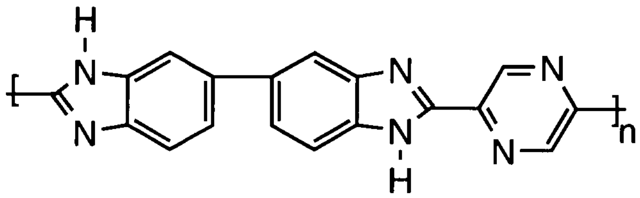

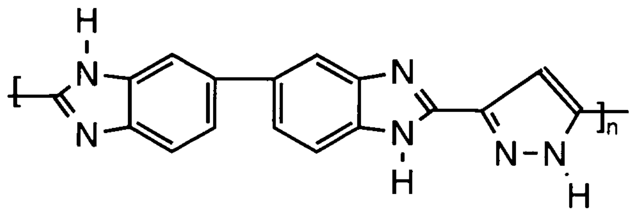

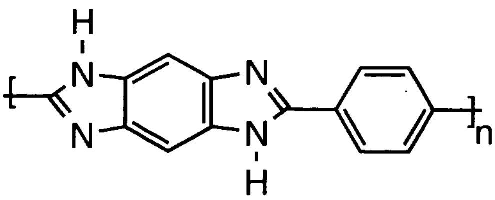

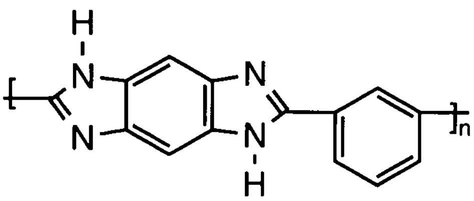

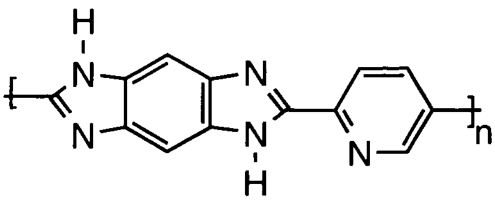

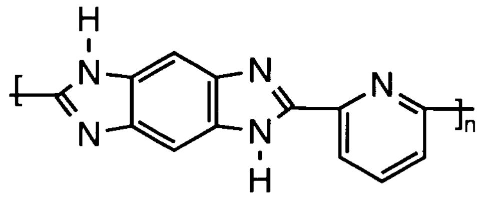

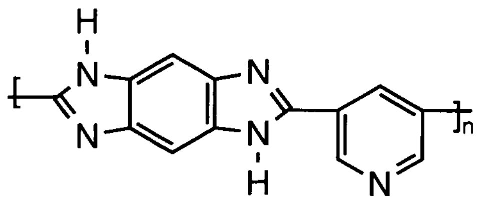

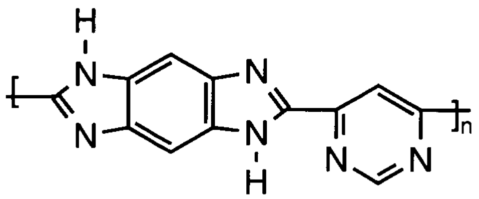

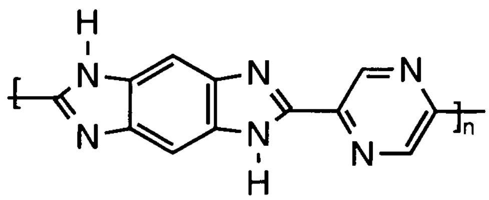

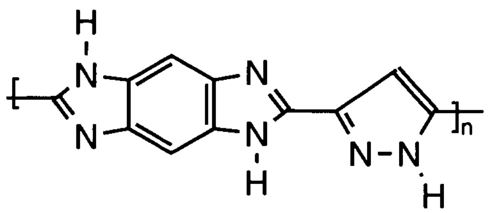

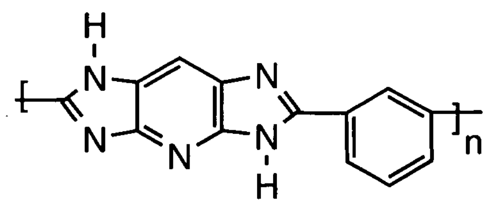

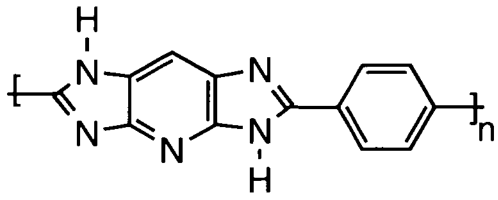

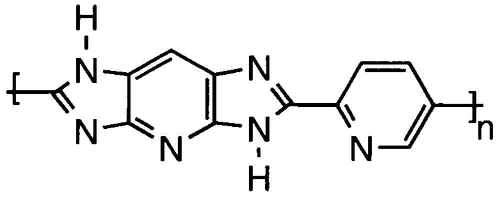

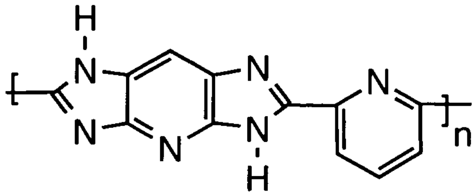

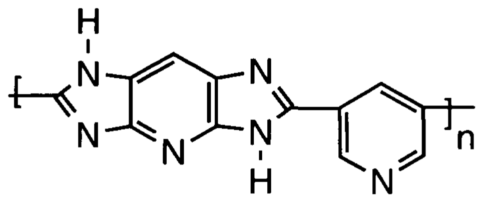

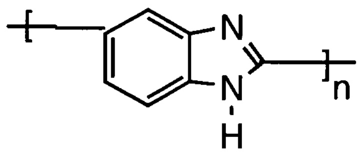

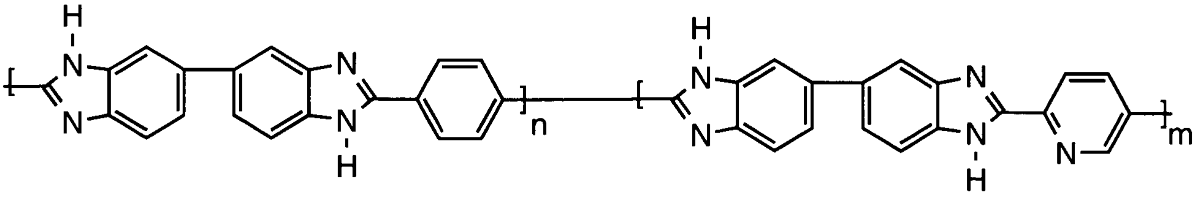

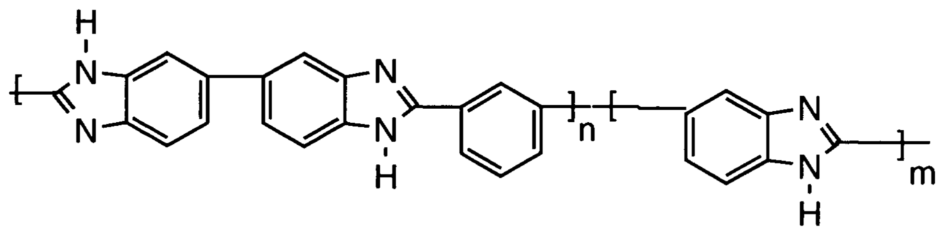

where n and m are each an integer greater than or equal to 10, preferably greater than or equal to 100.

**14.** The membrane according to claim 1 or 2, **characterized in that** the viscosity is adjusted by the addition of phosphoric acid after step A) and before step B).

**15.** The membrane according to claim 1 or 2, **characterized in that** the treatment of the membrane in step D) is carried out at temperatures from 0 °C to 150 °C, preferably at temperatures from 10 °C to 120 °C, in particular from room temperature (20 °C) to 90 °C, in the presence of moisture or water and/or water vapor.

**16.** The membrane according claim 1 or 2, **characterized in that** the treatment of the membrane in step D) is carried out for 10 seconds to 300 hours, preferably 1 minute to 200 hours.

**17.** The membrane according to claim 1 or 2, **characterized in that** an electrode is chosen as support in step B) and the treatment according to step D) is such that the membrane formed is no longer self-supporting.

**18.** The membrane according to claim 1 or 2, **characterized in that** a layer having a thickness of 20 to 4000 μm, preferably from 30 to 3500 μm, in particular from 50 to 3000 μm, is produced in step B).

**19.** The membrane according to claim 1 or 2, **characterized in that** the membrane formed after step D) has a thickness of 15 to 3000 μm, preferably from 20 to 2000 μm, in particular from 20 to 1500 μm.

**20.** An electrode provided with a proton-conducting polymer coating based on polyazoles which is obtainable by a method comprising the steps

A) Mixing one or more aromatic tetraamino compounds with one or more aromatic carboxylic acids or esters thereof which contain at least two acid groups per carboxylic acid monomer, or mixing one or more aromatic and/or heteroaromatic diaminocarboxylic acids, in polyphosphoric acid to form a solution and/or dispersion,
B) Applying a layer to an electrode using the mixture according to step A),
C) Heating the flat structure/layer obtainable according to step B) to temperatures of up to 350 °C, preferably up to 280 °C, under inert gas to form the polyazole polymer,
D) Treatment of the membrane formed in step C) in the presence of moisture.

**21.** The electrode according to claim 20, **characterized in that** the mixture from step A) is heated to temperatures of up to 350 °C, preferably up to 280 °C, so that the heating in step C) can partially or completely be dispensed with.

**22.** The electrode according to claim 20 or 21, wherein the coating has a thickness of 2 to 3000 μm, preferably from 3 to 2000 μm, in particular from 5 to 1500 μm.

**23.** A membrane-electrode assembly containing at least one electrode and at least one membrane according one or more of claims 1 to 18.

**24.** A membrane-electrode assembly containing at least one electrode according to claim 19 or 20 and at least one membrane according to one or more of claims 1 to 18.

**25.** A fuel cell containing one or more membrane-electrode assemblies according to claim 21 or 22.

## Revendications

1. Membrane polymère conductrice de protons à base de polyazoles pouvant être obtenue par un procédé englobant les étapes

    A) Mélange d'une ou plusieurs liaisons tétra-amino-aromatiques avec un ou plusieurs acides carboxyliques aromatiques ou leurs esters, qui contiennent au moins deux groupes d'acide par monomère d'acide carboxylique ou mélange d'un ou plusieurs acides diamino-carboxyliques aromatiques et / ou hétéroaromatiques, dans acide polyphosphorique sous formation d'une solution et / ou dispersion ;
    B) Application d'une couche avec utilisation du mélange selon étape A) sur un support ;
    C) Réchauffement de la formation/couche plane pouvant être obtenue selon l'étape B) sous gaz inerte à des températures atteignant 350 °C, de préférence allant jusqu'à 280 °C sous formation du polymère polyazole ;
    D) Traitement de la membrane formée dans l'étape C) en présence d'humidité à des températures et pour une durée suffisante jusqu'à ce qu'elle devienne autoporteuse.

2. Membrane selon revendication 1, **caractérisée en ce que** le mélange de l'étape A) est chauffé à des températures atteignant 350 °C, de préférence jusqu'à 280 °C, pour que le réchauffement dans l'étape C) puisse être éliminé en partie ou entièrement.

3. Membrane selon revendication 1 ou 2, **caractérisée en ce que**, en tant que liaisons tétra-amino-aromatiques 3,3',4,4'-tetraaminobiphényle, 2,3,5,6-tétraaminopyridine, 1,2,4,5-tétraaminobenzole, 3,3',4,4'-sulfone de tétraaminodiphényle, 3,3',4,4'-éther tétraaminodiphényle, 3,3',4,4'-tétraaminobenzophénone, 3,3',4,4'-méthane tétraaminodiphényle et 3,3',4,4'-méthane tétraaminodiphenyldimethyle.

4. Membrane selon revendication 1 ou 2, **caractérisée en ce que**, comme acide dicarboxylique aromatique, l'acide isophtalique, acide téréphtalique, acide phtalique, acide 5-hydroxyisophthalique, acide 4-hydroxyisophthalique, acide 2-hydroxyterephtalique, acide 5-aminoisophtalique, 5-N, acide N-diméthylaminoisophtalique, 5-N,acide N-diethyl aminoisophtalique, acide 2,5-dihydroxyterephtalique, acide 2,5 dihydroxyisophtalique, acide 2,3-dihydroxyisophtalique, acide 2,3-dihydroxyphtalique, acide 2,4-dihydroxyphtalique. Acide 3,4-dihydroxyphtalique, acide 3-fluorophtalique, acide 5- fluoroisophtalique, acide 2 fluoroterphtalique, acide tétrafluorophtalique, acide tétrafluoroisophtalique, acide tétrafluoroterephtalique, acide 1,4- naphthalènedicarboxylique, acide 1,5-naphthalènedicarboxylique, acide 2,6-naphthalènedicarboxylique, acide 2,7-naphthalènedicarboxylique, acide diphénique, acide 1,8-dihydroxynaphtalène- 3,6-dicarboxylique, éther diphénylique-acide 4,4'-dicarboxylique, benzophénone-acide 4,4'-dicarboxylique, sulfone de diphényl -4,4' acide dicarboxylique, acide biphényle 4,4'-dicarboxylique, acide 4-trifluorométhylphtalique, 2,2-bis(4-carboxyphényle)hexafluoropropane, acide 4,4'-stilbène dicarboxylique, acide 4-carboxycinnamique, ou leur ester alkyle C1-C20 ou ester aryle C5-C12, ou leur anhydride d'acide ou leur chlorure d'acide sont utilisés.

5. Membrane selon revendication 1 ou 2 **caractérisée en ce que**, comme acide carboxylique aromatique, des acides tricarboxylique, acides tétracarboxyliques ou leur ester alkyle C1-C20 ou ester aryle C5-C12 ou leur anhydride d'acide ou leur chlorure d'acide, de préférence acide 1,3,5-benzène tricarboxylique (acide trimésique); acide 1,2,4 benzène tricarboxylique (acide trimellitique); acide iminodiacétique (2-carboxyphényle), acide 3,5,3'-biphenyltricarboxylique; acide 3,5,4'-biphenyltricarboxylique et/ou acide 2,4,6-pyridinetricarboxylique sont utilisés.

6. Membrane selon revendication 1 ou 2, **caractérisée en ce que**, en tant qu'acide aromatique carboxylique, des acides tétracarboxyliques leur ester alkyle C1-C20 ou ester aryle C5-C12 ou leur anhydride d'acide ou chlorure d'acide, de préférence acide de benzène 1,2,4,5-tétracarboxylique; acide naphthalène-1,4,5,8-tetracarboxylique acide 3,5,3',5'-biphenyltetracarboxylique; acide de benzophénone tétracarboxylique, acide 3,3',4,4'-biphényltétracarboxylique, acide 2,2',3,3'-biphényltétracarboxylique, acide 1,2,5,6-naphthalène tétracarboxylique, acide 1,4,5,8-naphthalène tétracarboxylique sont utilisés.

7. Membrane selon revendication 5 **caractérisée en ce que** la teneur en acide tricaboxylique ou acides tétracarboxyliques (relatifs à l'acide dicarboxylique employé) s'élève à une valeur comprise entre 0 et 30 % de Mol de préférence 0,1 et 20 % de Mol, plus particulièrement 0,5 et 10 % de Mol.

8. Membrane selon revendication 1 ou 2, **caractérisée en ce que** comme acides hétéroaromatiques carboxyliques, des acides hétéroaromatiques dicarboxyliques et acides tricarboxyliques et acides tétracarboxyliques sont utilisés, lesquels contiennent au moins un atome d'azote, d'oxygène, de soufre ou de phosphore dans l'aromate, de préférence acide pyridine dicarboxylique-2,5, acide pyridine dicarboxylique-3,5, acide pyridine dicarboxylique-2,6, acide

pyridine dicarboxylique-2,4, acide phénylique 4 -acide pyridine dicarboxylique 2,5, acide 3,5-pyrazole dicarboxylique, acide 2,6 -pyrimidine dicarboxylique, acide 2,5-pyrazine dicarboxylique, acide 2,4,6-pyridine tricarboxylique, acide benzimidazole-5,6-dicarboxylique, et leur ester alkyle C1-C20 ou ester aryle C5-C12, ou leur anhydride d'acide ou leur chlorure d'acide.

**9.** Membrane selon revendication 1 ou 2 **caractérisée en ce que** dans l'étape A) un acide polyphosphorique avec une teneur calculée en tant que $P_2O_5$ (acidimétrique) d'au moins 83% est utilisé.

**10.** Membrane selon revendication 1 ou 2 **caractérisée en ce que** dans l'étape A) une solution ou une dispersion// suspension est produite.

**11.** Membrane selon revendication 1 **caractérisée en ce que** dans l'étape C) un polymère comprenant des unités de benzimidazole de la formule

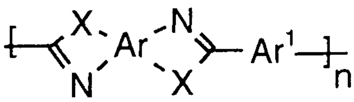

(I)

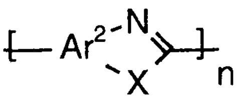

(II)

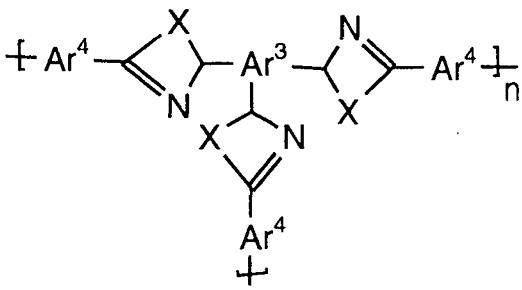

(III)

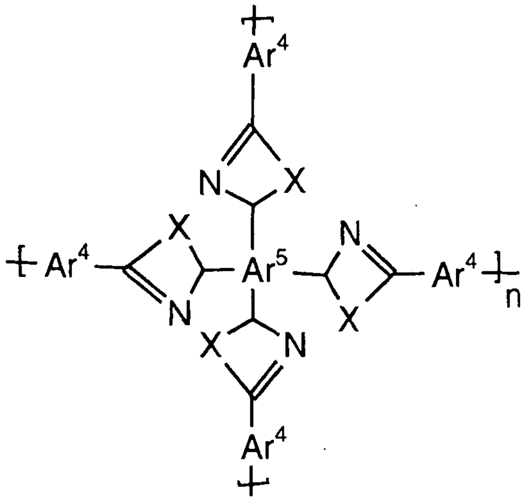

(IV)

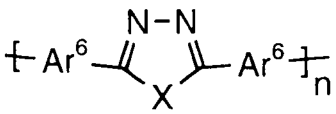

(V)

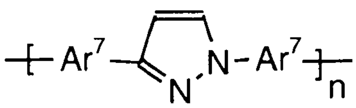

(VI)

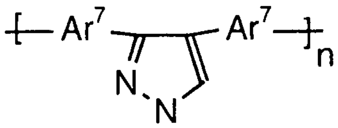

(VII)

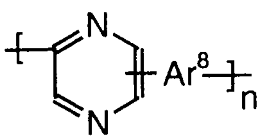

(VIII)

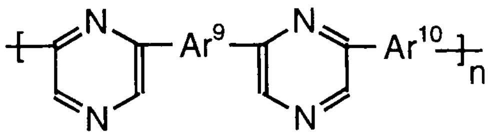

(IX)

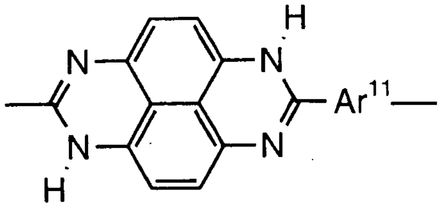

(X)

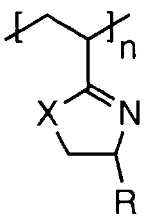

(XI)

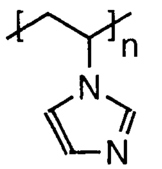

(XII)

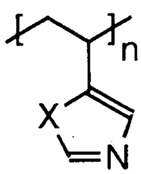

(XIII)

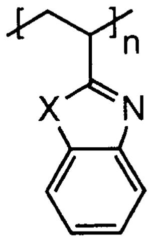

(XIV)

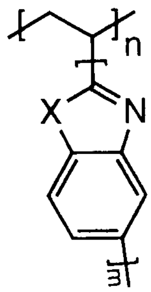

(XV)

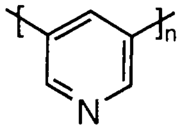

(XVI)

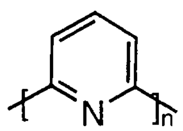

(XVII)

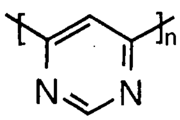

(XVIII)

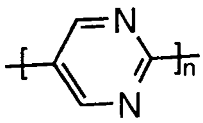

(XIX)

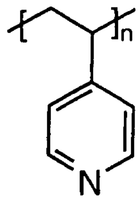

(XXI)

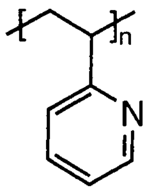

(XXII)

dans laquelle

Ar sont identiques ou différents et pour un groupe aromatique ou hétéroaromatique à quatre liaisons, qui peut être à un ou plusieurs noyaux,

$Ar^1$ sont identiques ou différents et pour un groupe aromatique ou hétéroaromatique à deux liaisons, qui peut être à un ou plusieurs noyaux,

$Ar^2$ sont identiques ou différents et pour un groupe aromatique ou hétéroaromatique à deux ou trois liaisons, qui peut être à un ou plusieurs noyaux,

$Ar^3$ sont identiques ou différents et pour un groupe aromatique ou hétéroaromatique à trois liaisons, qui peut être à un ou plusieurs noyaux,

$Ar^4$ sont identiques ou différents et pour un groupe aromatique ou hétéroaromatique à trois liaisons, qui peut être à un ou plusieurs noyaux,

$Ar^5$ sont identiques ou différents et pour un groupe aromatique ou hétéroaromatique à quatre liaisons, qui peut être à un ou plusieurs noyaux,

$Ar^6$ sont identiques ou différents et pour un groupe aromatique ou hétéroaromatique à deux liaisons, qui peut être à un ou plusieurs noyaux,

$Ar^7$ sont identiques ou différents et pour un groupe aromatique ou hétéroaromatique à deux liaisons, qui peut être à un ou plusieurs noyaux,

$Ar^8$ sont identiques ou différents et pour un groupe aromatique ou hétéroaromatique à trois liaisons, qui peut être à un ou plusieurs noyaux,

$Ar^9$ sont identiques ou différents et pour un groupe aromatique ou hétéroaromatique à deux ou trois ou quatre liaisons, qui peut être à un ou plusieurs noyaux,

$Ar^{10}$ sont identiques ou différents et pour un groupe aromatique ou hétéroaromatique à deux ou trois liaisons, qui peut être à un ou plusieurs noyaux,

$Ar^{11}$ sont identiques ou différents et pour un groupe aromatique ou hétéroaromatique à deux liaisons, qui peut être à un ou plusieurs noyaux,

X est identique ou différent et pour oxygène, soufre ou un groupe aminé, qui porte un atome d'hydrogène, un groupe présentant un atome de carbone 1-20, de préférence un groupe alkyle ou alkoxy non ramifié ou un groupe aryle comme autre reste

R est identique ou différent pour oxygène, un groupe alkyle et un groupe aromatique et

n, m est un nombre entier supérieur ou égal à 10, de préférence supérieur ou égal à 100,

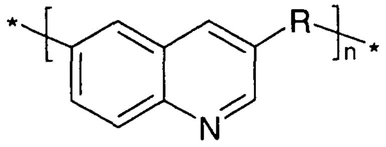

(XX)

dans laquelle
R est identique ou différent pour un groupe alkyle et un groupe aromatique et
n est un nombre entier supérieur ou égal à 10, de préférence supérieur ou égal à 100,
est formé.

**12.** Membrane selon revendication 1 **caractérisé en ce que** dans l'étape C) un polymère sélectionné dans le groupe polybenzimidazole, poly(pyridine), poly(pyrimidine), polyimidazole, polybenzthiazole, polybenzoxazole, polyoxadiazole, polyquinoxalines, polythiadiazole et poly(tétrazapyrène) est formé.

**13.** Membrane selon revendication 1 **caractérisée en ce que** dans l'étape C) un polymère comprenant des unités répétitives de benzimidazole de la formule

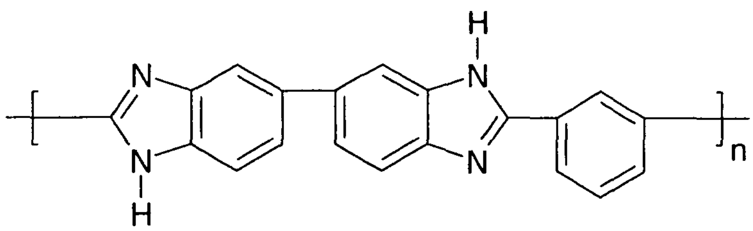

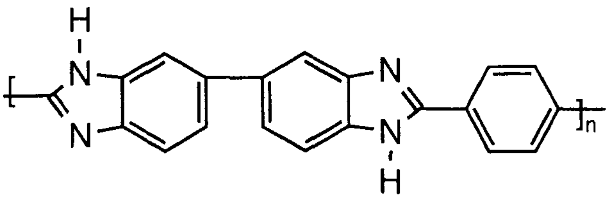

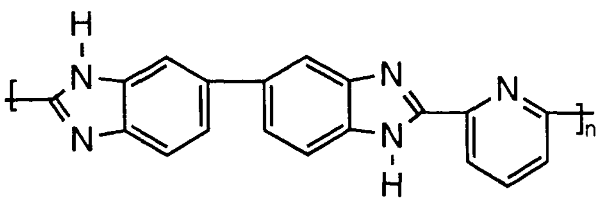

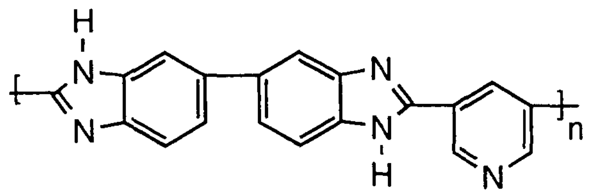

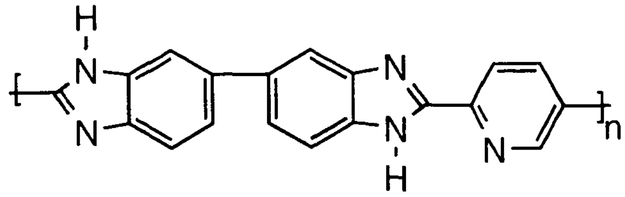

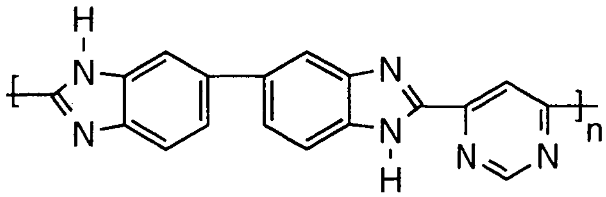

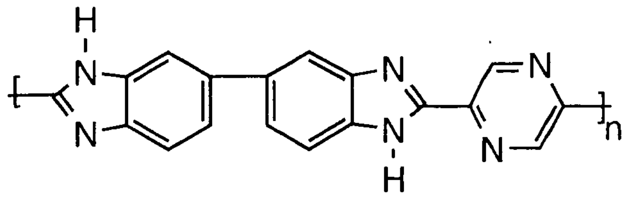

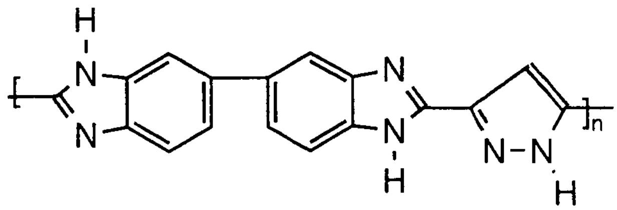

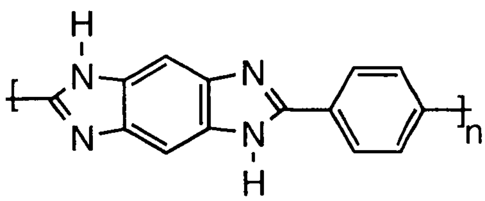

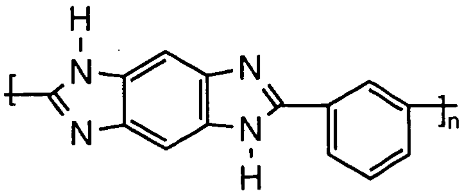

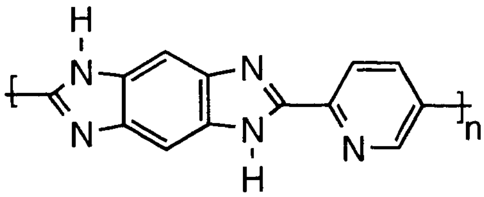

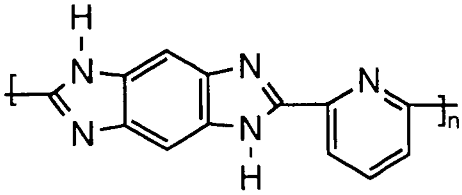

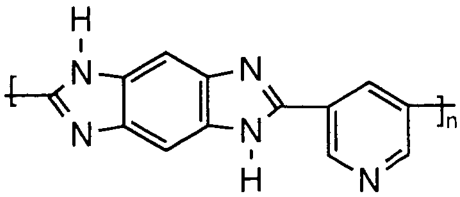

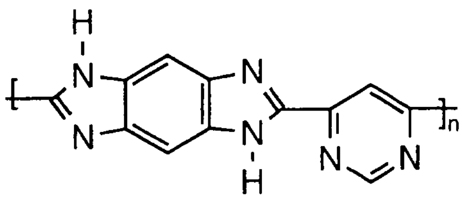

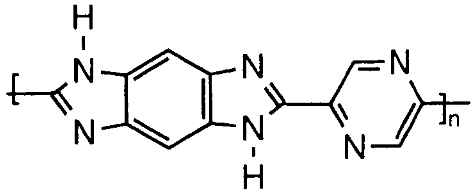

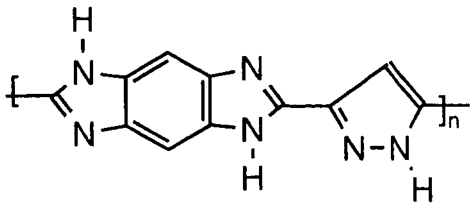

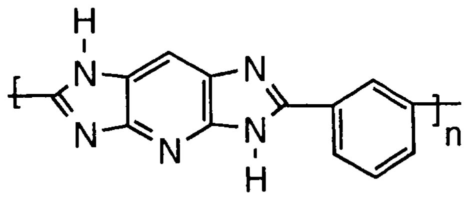

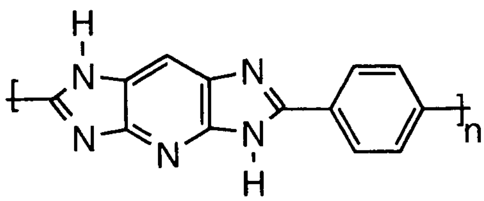

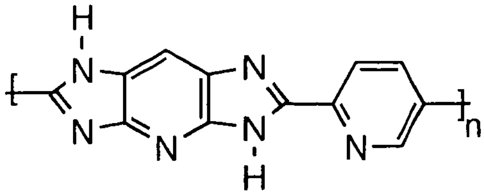

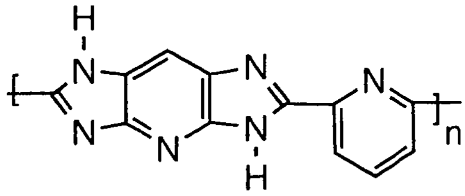

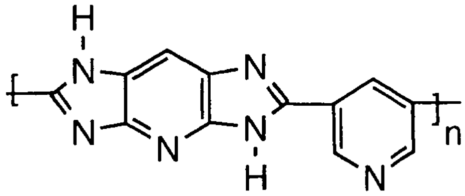

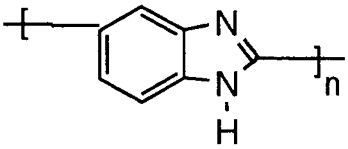

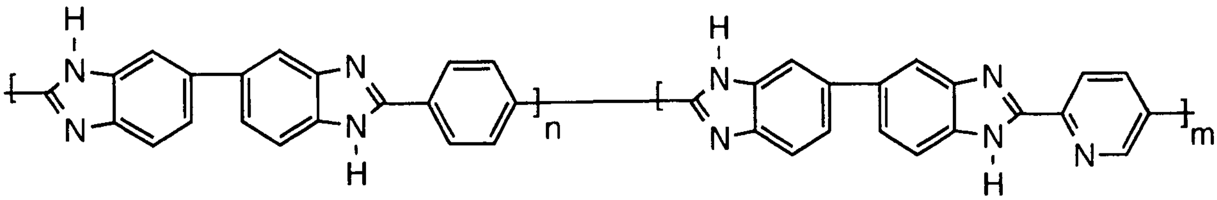

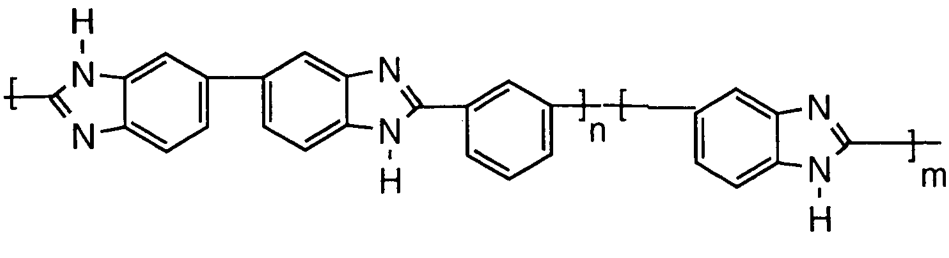

sachant que n et m est un nombre entier supérieur ou égal à 10 de préférence supérieur ou égal à 100, est formé.

14. Membrane selon revendication 1 ou 2 **caractérisée en ce que**, après l'étape A) et avant l'étape B), la viscosité est ajustée par ajout d'acide phosphorique.

15. Membrane selon revendication 1 ou 2 **caractérisée en ce que** le traitement de la membrane dans l'étape D) a lieu à des températures supérieures à 0°C et 150 °C, de préférence à des températures entre 10 °C et 120 °C, plus

particulièrement entre la température ambiante (20 °C) et 90 °C, en présence d'humidité ou eau et/ou vapeur d'eau.

**16.** Membrane selon revendication 1 ou 2 **caractérisée en ce que** le traitement de la membrane dans l'étape D) est de 10 secondes à 300 heures, de préférence entre 1 minute et 200 heures.

**17.** Membrane selon revendication 1 ou 2 **caractérisée en ce que** dans l'étape B) une électrode est choisie en tant que support et le traitement conçu de telle manière que la membrane formée n'est plus autoporteuse.

**18.** Membrane selon revendication 1 ou 2 **caractérisée en ce que** dans l'étape B) une couche avec une épaisseur de 20 et 400 μm, de préférence entre 30 et 3500 μm, plus particulièrement entre 50 et 3000 μm est produite.

**19.** Membrane selon revendication 1 ou 2 **caractérisée en ce que** la membrane formée après l'étape D) a une épaisseur entre 15 et 3000 μm, de préférence entre 20 et 2000 μm, plus particulièrement entre 20 et 1500 μm.

**20.** Électrode qui est obtenue avec revêtement de polymère conducteur de protons à base de polyazole par un procédé englobant les étapes

A) Mélange d'une ou plusieurs liaisons tétra-amino-aromatiques avec un ou plusieurs acides carboxyliques aromatiques ou leurs esters, qui contiennent au moins deux groupes d'acide par monomère d'acide carboxylique ou mélange d'un ou plusieurs acides diamino-carboxyliques aromatiques et / ou hétéroaromatiques, dans acide polyphosphorique sous formation d'une solution et / ou dispersion ;
B) Application d'une couche avec utilisation d'un mélange selon étape A) sur une électrode ;
C) Réchauffement de la formation/couche plane pouvant être obtenue selon l'étape B) sous gaz inerte à des températures atteignant 350 °C, de préférence allant jusqu'à 280 °C sous formation du polymère polyazole ;
D) Traitement de la membrane formée dans l'étape C) en présence d'humidité.

**21.** Électrode selon revendication 20, **caractérisée en ce que** le mélange de l'étape A) est chauffé à des températures atteignant 350 °C, de préférence 280 °C, pour que le réchauffement dans l'étape C) puisse être éliminé en partie ou entièrement.

**22.** Électrode selon revendication 20 ou 21 sachant que le revêtement a une épaisseur comprise entre 2 et 3000 μm, de préférence entre 3 et 2000 μm, plus particulièrement entre 5 et 1500 μm.

**23.** Unité membrane-électrode comprenant au moins une électrode et au moins une membrane selon une ou plusieurs revendications de 1 à 18.

**24.** Unité membrane-électrode comprenant au moins une électrode selon revendication 19 ou 20 et au moins une membrane selon une ou plusieurs revendications de 1 à 18.

**25.** Cellule à combustion comprenant une ou plusieurs unités de membrane-électrode selon revendication 21 ou 22

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10109829
- JP 2001118591 A
- US 4191618 A
- US 4212714 A
- US 4333805 A


### In der Beschreibung aufgeführte Nicht-Patentliteratur


- **Gang, Xiao ; Hjuler, H. A. ; Olsen, C. ; Berg, R. W. ; Bjerrum, N. J.** Electrolyte additives for phosphoric acid fuel cells. *Chem. Dep. A, Tech. Univ. Denmark, Lyngby, Den. J. Electrochem. Soc.,* 1993, vol. 140 (4), 896-902
- **Razaq, M. ; Razaq, A. ; Yeager, E. ; DesMarteau, Danyl D. ; Singh, S.** Case Cent. Electrochem. Sci., Case West. Reserve Univ., Cleveland, OH, USA. *J. Electrochem. Soc.,* 1989, vol. 136 (2), 385-90
- **F. Gugumus.** Plastics Additives. Hanser Verlag, 1990
- **N.S. Allen ; M. Edge.** Fundamentals of Polymer Degradation and Stability. Elsevier, 1992
- **H. Zweifel.** Stabilization of Polymeric Materials. Springer, 1998